(19) Europäisches Patentamt
European Patent Office
Office européen des brevets

(11) **EP 4 598 086 A1**

(12) **EUROPEAN PATENT APPLICATION**
published in accordance with Art. 153(4) EPC

(43) Date of publication:
**06.08.2025   Bulletin 2025/32**

(21) Application number: **22959782.8**

(22) Date of filing: **26.09.2022**

(51) International Patent Classification (IPC):
**H04W 16/28** (2009.01)

(52) Cooperative Patent Classification (CPC):
**H04W 16/28**

(86) International application number:
**PCT/CN2022/121504**

(87) International publication number:
**WO 2024/065130 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **CHI, Liangang**
**Beijing 100085 (CN)**
• **YANG, Li**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **RECONFIGURABLE INTELLIGENT SURFACE-BASED PRECODING METHOD AND APPARATUS**

(57)   Disclosed in embodiments of the present application are a reconfigurable intelligent surface-based precoding method and apparatus. The method comprises: obtaining unit arrangement information and block information of a second network device, the block information being used for indicating a plurality of blocks of the second network device; from the plurality of blocks of the second network device, determining at least one target block for sending a reference signal; receiving channel feedback information sent by a terminal device and determined on the basis of the reference signal sent by the at least one target block; determining first indication information according to the channel feedback information, the first indication information being used for determining a phase shift matrix of the second network device; and sending the first indication information to the second network device. Units of the second network device can be divided into a plurality of groups, making a far-field hypothesis be established for each group; moreover, the complexity of reconfigurable intelligent surface-based precoding is effectively reduced, the industrialization process is accelerated, the communication efficiency of a reconfigurable intelligent surface-assisted communication system is improved, and interference is reduced.

acquiring unit arrangement information and block information of a second network device, in which the block information indicates a plurality of blocks in the second network device — 201

determining at least one target block for sending a reference signal from the plurality of blocks in the second network device — 202

receiving channel feedback information sent by a terminal, in which the channel feedback information is determined by the terminal based on the reference signal sent by the at least one target block — 203

determining first indication information according to the channel feedback information, in which the first indication information is used to determine a phase shift matrix for the second network device — 204

sending the first indication information to the second network device — 205

FIG. 2

## Description

### TECHNICAL FIELD

The present disclosure generally relates to the field of communication technologies, and more particularly relates to a precoding method based on a reconfigurable intelligent surface (RIS) and a precoding device based on an RIS.

### BACKGROUND

Since the uncontrollability of a wireless environment in traditional communications often leads to the reduced service quality, the research focuses on the deployment of an RIS on surfaces of various objects in a wireless transmission environment, which is expected to break through the uncontrollability of traditional wireless channels, build intelligent programmable wireless communications, and introduce a new paradigm for future wireless communications.

However, the size of RIS arrays is often large, comparable to the propagation distance, and the precoding scheme based on the traditional far-field assumption may no longer be applicable.

### SUMMARY

Embodiments of a first aspect of the present disclosure provide a precoding method based on an RIS, performed by a first network device and including: acquiring unit arrangement information and block information of a second network device, in which the block information indicates a plurality of blocks in the second network device; determining at least one target block for sending a reference signal from the plurality of blocks in the second network device; receiving channel feedback information sent by a terminal, in which the channel feedback information is determined by the terminal based on the reference signal sent by the at least one target block; determining first indication information according to the channel feedback information, in which the first indication information is used to determine a phase shift matrix for the second network device; and sending the first indication information to the second network device.

Embodiments of a second aspect of the present disclosure provide a precoding method based on an RIS, performed by a second network device and including: sending unit arrangement information and block information of the second network device to a first network device, in which the block information indicates a plurality of blocks in the second network device; sending a reference signal to a terminal, in which the reference signal is used by the terminal to determine channel feedback information of a channel between at least one target block in the second network device that sends the reference signal and the terminal; receiving first indication information sent by the first network device, in which the first indication information is determined by the first network device based on the channel feedback information; and determining a phase shift matrix for the second network device according to the first indication information.

Embodiments of a third aspect of the present disclosure provide a precoding method based on an RIS, performed by a terminal and including: receiving a reference signal sent by a second network device; determining channel feedback information of a channel between at least one target block in the second network device that sends the reference signal and the terminal according to the reference signal; and sending the channel feedback information to a first network device, in which the channel feedback information is used to determine first indication information, and the first indication information is used to determine a phase shift matrix for the second network device.

Embodiments of a fourth aspect of the present disclosure provide a precoding device based on an RIS, including a transceiver unit and a processing unit. The transceiver unit is configured to acquire unit arrangement information and block information of a second network device, in which the block information indicates a plurality of blocks in the second network device. The processing unit is configured to determine at least one target block for sending a reference signal from the plurality of blocks in the second network device. The transceiver unit is further configured to receive channel feedback information sent by a terminal, in which the channel feedback information is determined by the terminal based on the reference signal sent by the at least one target block. The processing unit is further configured to determine first indication information according to the channel feedback information, in which the first indication information is used to determine a phase shift matrix for the second network device. The transceiver unit is further configured to send the first indication information to the second network device.

Embodiments of a fifth aspect of the present disclosure provide a precoding device based on an RIS, including a transceiver unit and a processing unit. The transceiver unit is configured to send unit arrangement information and block information of the precoding device to a first network device, in which the block information indicates a plurality of blocks in the precoding device. The transceiver unit is further configured to send a reference signal to a terminal, in which the reference signal is used by the terminal to determine channel feedback information of a channel between at least one target block in the precoding device that sends the reference signal and the terminal. The transceiver unit is further configured to receive first indication information sent by the first network device, in which the first indication information is determined by the first network device based on the channel feedback information. The processing unit is configured to determine a phase shift matrix for the precoding device according to the first indication information.

Embodiments of a sixth aspect of the present disclosure provide a precoding device based on an RIS, including a transceiver unit and a processing unit. The transceiver unit is configured to receive a reference signal sent by a second network device. The processing unit is configured to determine channel feedback information of a channel between at least one target block in the second network device that sends the reference signal and the precoding device according to the reference signal. The transceiver unit is further configured to send the channel feedback information to a first network device, in which the channel feedback information is used to determine first indication information, and the first indication information is used to determine a phase shift matrix for the second network device.

Embodiments of a seventh aspect of the present disclosure provide a communication device, which includes a processor and a memory having stored therein a computer program. The processor executes the computer program stored in the memory, so that the communication device performs the precoding method based on the RIS described above in the embodiments of the first or second aspect.

Embodiments of an eighth aspect of the present disclosure provide a communication device, which includes a processor and a memory having stored therein a computer program. The processor executes the computer program stored in the memory, so that the communication device performs the precoding method based on the RIS described above in the embodiments of the third or fourth aspect.

Embodiments of a ninth aspect of the present disclosure provide a communication device, which includes a processor and an interface circuit. The interface circuit is configured to receive code instructions and transmit the code instructions to the processor. The processor is configured to run the code instructions to enable the communication device to execute the precoding method based on the RIS described above in the embodiments of the first or second aspect.

Embodiments of a tenth aspect of the present disclosure provide a communication device, which includes a processor and an interface circuit. The interface circuit is configured to receive code instructions and transmit the code instructions to the processor. The processor is configured to run the code instructions to enable the communication device to execute the precoding method based on the RIS described above in the embodiments of the third aspect.

Embodiments of an eleventh aspect of the present disclosure provide a computerreadable storage medium for storing instructions that, when executed, cause the precoding method based on the RIS described above in the embodiments of the first or second aspect to be implemented.

Embodiments of a twelfth aspect of the present disclosure provide a computerreadable storage medium for storing instructions that, when executed, cause the precoding method based on the RIS described above in the embodiments of the third aspect to be implemented.

Embodiments of a thirteenth aspect of the present disclosure provide a computer program that, when run on a computer, causes the computer to execute the precoding method based on the RIS described above in the embodiments of the first or second aspect.

Embodiments of a fourteenth aspect of the present disclosure provide a computer program that, when run on a computer, causes the computer to execute the precoding method based on the RIS described above in the embodiments of the third aspect.

With the precoding method and the precoding device based on the RIS provided in the embodiments of the present disclosure, by acquiring unit arrangement information and block information of a second network device, in which the block information indicates a plurality of blocks in the second network device; determining at least one target block for sending a reference signal from the plurality of blocks in the second network device; receiving channel feedback information sent by a terminal, in which the channel feedback information is determined by the terminal based on the reference signal sent by the at least one target block; determining first indication information according to the channel feedback information, in which the first indication information is used to determine a phase shift matrix for the second network device; and sending the first indication information to the second network device, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, and reducing the interference.

Additional aspects and advantages of the present disclosure will be given in part in the following descriptions, become apparent in part from the following descriptions, or be learned from the practice of the present disclosure.

## BRIEF DESCRIPTION OF THE DRAWINGS

In order to more clearly illustrate the technical solutions in the embodiments of the present disclosure or the background, the drawings used in the embodiments of the present disclosure or the background will be described below.

FIG. 1 is a schematic diagram of an architecture of a communication system provided in an embodiment of the present disclosure.
FIG. 2 is a schematic flowchart of a precoding method based on an RIS provided in an embodiment of the present disclosure.

FIG. 3 is a schematic flowchart of a precoding method based on an RIS provided in an embodiment of the present disclosure.

FIG. 4 is a schematic flowchart of a precoding method based on an RIS provided in an embodiment of the present disclosure.

FIG. 5 is a schematic flowchart of a precoding method based on an RIS provided in an embodiment of the present disclosure.

FIG. 6 is a schematic flowchart of a precoding method based on an RIS provided in an embodiment of the present disclosure.

FIG. 7 is a schematic flowchart of a precoding method based on an RIS provided in an embodiment of the present disclosure.

FIG. 8 is a schematic flowchart of a precoding method based on an RIS provided in an embodiment of the present disclosure.

FIG. 9 is a schematic flowchart of a precoding method based on an RIS provided in an embodiment of the present disclosure.

FIG. 10 is a schematic flowchart of a precoding method based on an RIS provided in an embodiment of the present disclosure.

FIG. 11 is a schematic flowchart of a precoding method based on an RIS provided in an embodiment of the present disclosure.

FIG. 12 is a schematic flowchart of a precoding method based on an RIS provided in an embodiment of the present disclosure.

FIG. 13 is a schematic flowchart of a precoding method based on an RIS provided in an embodiment of the present disclosure.

FIG. 14 is a schematic block diagram of a precoding device based on an RIS provided in an embodiment of the present disclosure.

FIG. 15 is a schematic block diagram of a precoding device based on an RIS provided in an embodiment of the present disclosure.

FIG. 16 is a schematic block diagram of a precoding device based on an RIS provided in an embodiment of the present disclosure.

FIG. 17 is a schematic block diagram of another precoding device based on an RIS provided in an embodiment of the present disclosure.

FIG. 18 is a schematic block diagram of a chip provided in an embodiment of the present disclosure.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present disclosure. Instead, they are merely examples of apparatuses and methods consistent with aspects related to the embodiments of the present disclosure as recited in the appended claims.

Terms used herein in the embodiments of the present disclosure are only for the purpose of describing specific embodiments, but should not be construed to limit the embodiments of the present disclosure. As used in the embodiments of the present disclosure and the appended claims, "a/an", and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly the second information may also be referred to as the first information, without departing from the scope of the embodiments of the present disclosure. As used herein, the term "if" may be construed to mean "when" or "upon" or "in response to determining" depending on the context.

Reference will be made in detail to the embodiments of the present disclosure, examples of which are shown in the drawings. The same or similar elements are denoted by the same or similar reference numerals throughout the descriptions. The embodiments described herein with reference to the drawings are illustrative, and used to explain the present disclosure. The embodiments shall not be construed to limit the present disclosure.

In order to better understand a precoding method based on an RIS in an embodiment of the present disclosure, a communication system to which the embodiments of the present disclosure is applicable is first described below.

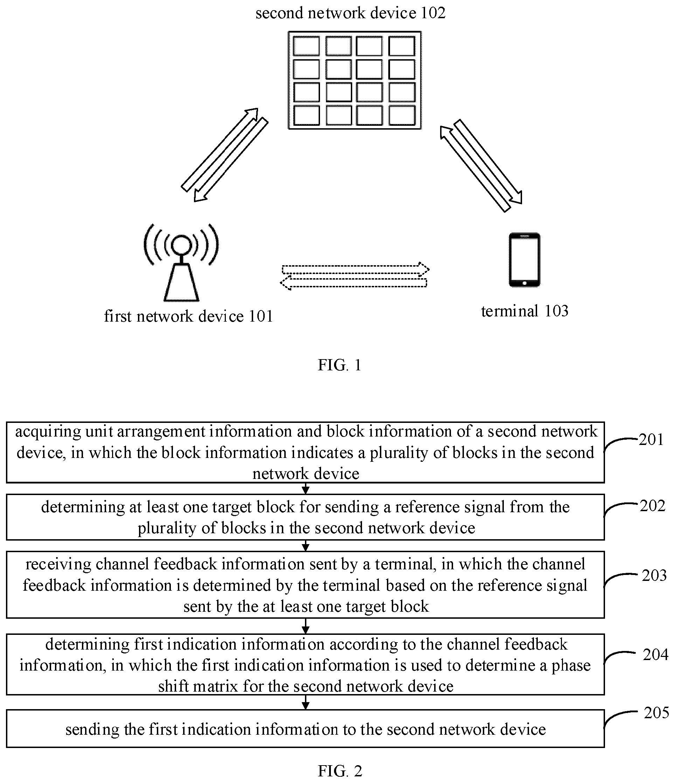

Reference is made to FIG. 1, which is a schematic diagram of the architecture of a communication system provided in an embodiment of the present disclosure. The communication system may include, but is not limited to, one first network device, one second network device and one terminal. The number and form of devices shown in FIG. 1 are only used as examples and do not constitute a limitation on the embodiments of the present disclosure. In actual applications, two or more network devices and two or more terminals may be included. The communication system shown in FIG. 1 includes, for example, one first network device 101, one second network device 102 and one terminal 103.

It should be noted that the technical solution in the embodiments of the present disclosure may be applied to various communication systems, such as a long term evolution (LTE) system, a fifth generation (5G) mobile communication system, a 5G new radio (NR) system, or other future new mobile communication systems.

The first network device 101 in an embodiment of the present disclosure is an entity on the network side for sending or receiving signals. For example, the first network device 101 may be an evolved NodeB (eNB), a transmission reception point (TRP), a next generation NodeB (gNB) in an NR system, a base station in other future mobile communication systems, or an access node in a wireless fidelity (Wi-Fi) system. The specific technology and specific device form adopted by the access network device are not limited in the embodiments of the present disclosure. The access network device provided in the embodiments of the present disclosure may include a central unit (CU) and a distributed unit (DU), in which the CU may also be referred to as a control unit. The CU-DU structure may be used to split the protocol layer of the access network device, such as the base station, and the functions of some protocol layers are placed in the CU for centralized control, and the functions of the remaining protocol layers or all of the protocol layers are distributed in the DU, and the DU is centrally controlled by the CU.

The second network device 102 in an embodiment of the present disclosure is a device capable of regulating a communication channel. The second network device 102 is equipped with a large number of (electromagnetic) units, and may change the radiation characteristics of the (electromagnetic) units by adjusting the physical properties (such as capacitive reactance, impedance or inductive reactance) of the (electromagnetic) units, thereby dynamically regulating electromagnetic waves in the space to form a beam in a specific direction in the space. For example, the second network device 102 may be an RIS or the like. In an embodiment of the present disclosure, the (electromagnetic) units in the second network device 102 may be active or passive, or some (electromagnetic) units in the second network device 102 may be active and some (electromagnetic) units in the second network device 102 may be passive.

The terminal 103 in an embodiment of the present disclosure is an entity on the user side for receiving or sending signals, such as a mobile phone. The terminal may also be referred to as a terminal device, a user equipment (UE), a mobile station (MS), a mobile terminal (MT), etc. The terminal may be a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the present disclosure.

The wireless environment is an uncontrollable factor in traditional communications, and its uncontrollability usually has a negative impact on the communication efficiency and leads to the reduced service quality. For example, the signal attenuation limits the propagation distance of radio signals, multipath effects lead to fading phenomena, and the reflection and refraction of large objects are major uncontrollable factors. Deploying RISs on surfaces of various objects in wireless transmission environments is expected to break through the uncontrollability of traditional wireless channels, build intelligent programmable wireless communications, and introduce a new paradigm for future wireless communications. Specifically, with the RIS, it is possible to use the precoding technology to reflect or transmit a signal incident on its surface to a specific direction, thereby enhancing the signal strength at a receiving end or reducing the interference, so as to achieve the control over the channel.

As shown in FIG. 1, in the communication system assisted by the second network device 102 (RIS), the first network device 101 reflects or transmits a signal to the terminal 103 via the second network device 102 (RIS), or the terminal 103 reflects or transmits a signal to the first network device 101 via the second network device 102 (RIS). In order to enhance the power of useful signals and reduce the interference, the second network device 102 needs to be precoded.

In the related art, the method for determining the precoding of the second network device 102 (RIS) is relatively complex. In the academic research, the joint design of the precoding at the RIS and the base station is mainly carried out by alternating optimization technologies. Although this method may achieve the best performance, it is too complex and not suitable for practical applications. At the same time, the size of RIS arrays is often large, comparable to the propagation distance, and the precoding scheme based on the traditional far-field assumption may no longer be applicable. Therefore, practical RIS precoding schemes have become the key technology for the RIS industrialization.

It may be understood that the communication system described in this embodiment of the present disclosure is for the purpose of more clearly illustrating the technical solution of the embodiments of the present disclosure, and does not constitute a limitation on the technical solution provided in the embodiments of the present disclosure. Those of ordinary skill in the art may know that with the evolution of the system architecture and the emergence of new business scenarios, the technical solution provided in the embodiments of the present disclosure is also applicable to similar technical problems.

The precoding method and the precoding device based on the RIS provided in the present disclosure are described in detail below in conjunction with the accompanying drawings.

Reference is made to FIG. 2, which is a schematic flowchart of a precoding method based on an RIS provided in an embodiment of the present disclosure. It should be noted that the precoding method based on the RIS in this embodiment of the present disclosure is performed by a first network device. This method may be executed independently or in combination with any one of other embodiments of the present disclosure. As shown in FIG. 2, the method may include, but is not limited to, the following steps.

At step 201, unit arrangement information and block information of a second network device are acquired, in which the block information indicates a plurality of blocks in the second network device.

It should be noted that in each embodiment of the present disclosure, the second network device may be an RIS.

In an embodiment of the present disclosure, the first network device may acquire unit arrangement information and block information of the second network device, in which the block information of the second network device indicates a plurality of blocks in the second network device, and the unit arrangement information of the second network device may indicate how the units in the second network device are arranged.

It should be noted that each block in the second network device is a continuous portion of the second network device, such as a continuous RIS surface in the RIS.

It may be understood that the first network device may determine how the units in the second network device are arranged by acquiring the unit arrangement information of the second network device, and the first network device may determine each block in the second network device by acquiring the block information of the second network device.

In some implementations, the unit arrangement information may include at least one of: a row number of units in the second network device; a column number of units in the second network device; a row spacing of units in the second network device; a column spacing of units in the second network device; direction information of the second network device, such as the normal direction of the second network device, or the like; or a unit in the second network device capable of sending a reference signal, which may also be an active unit in the second network device.

In some implementations, the block information may include at least one of: the number of rows of units included in each block, the number of columns of units included in each block, and a center unit of each block.

It may be understood that the unit arrangement information and the block information of the second network device may be flexibly configured according to the specific shape of the second network device or the like. For example, if the second network device is circular in shape, the unit arrangement information of the second network device may further include the radius or diameter of the second network device and the like, and the block information may also include other information to indicate each block in the second network device.

In an embodiment of the present disclosure, the first network device may receive the unit arrangement information and/or block information reported by the second network device, or the first network device may acquire the unit arrangement information and/or block information of the second network device in an offline stage.

In some implementations, the first network device may also configure a plurality of blocks in the second network device according to the unit arrangement information of the second network device to obtain the block information of the second network device.

Optionally, each block in the second network device may send the reference signal.

At step 202, at least one target block for sending a reference signal is determined from the plurality of blocks in the second network device.

In an embodiment of the present disclosure, the first network device may determine at least one target block from the plurality of blocks in the second network device, and the at least one target block is used to send a reference signal to the terminal.

In an embodiment of the present disclosure, the first network device may determine the at least one target block from the plurality of blocks in the second network device in a variety of ways.

As an example, for example, the first network device may select P blocks at equal intervals in a horizontal direction of the second network device, and Q blocks at equal intervals in a vertical direction of the second network device as the target blocks, and so on.

In some implementations, the first network device configures a reference signal for the at least one target block and sends first reference signal configuration information to the at least one target block, and the at least one target block may send the reference signal to the terminal according to the first reference signal configuration information.

Optionally, the first reference signal configuration information includes at least one of: a unit in the target block occupied by the reference signal sent by each target block, generation information of a reference signal sequence sent by each target block, a serial number of an antenna port occupied by the reference signal sent by each target block, or time-frequency resources occupied by the reference signal sent by each target block.

At step 203, channel feedback information sent by a terminal is received, in which the channel feedback information is determined by the terminal based on the reference signal sent by the at least one target block.

In an embodiment of the present disclosure, the first network device may receive channel feedback information sent by the terminal, in which the channel feedback information is determined by the terminal based on the reference signal sent by the at least one target block.

The channel feedback information may reflect the state of the channel between each target block in the second network device and the terminal. The first network device may determine first indication information used to determine a phase shift matrix for the second network device based on the channel feedback information.

In some implementations, the channel feedback information includes at least one first precoding matrix indicator (PMI) and an index of a reference signal corresponding to each first PMI. The first PMI indicates a precoding matrix for a channel between each target block in the second network device and the terminal.

It may be understood that each target block sends a reference signal to the terminal, and the terminal receives the reference signal sent by each target block and performs estimations to obtain the precoding matrix for the channel between each target block and the terminal. The precoding matrix for the channel between each target block and the terminal is indicated by one first PMI, and the reference signal sent by the target block is indicated by the index of the reference signal corresponding to the first PMI.

In some implementations, the first network device may send second reference signal configuration information to the terminal according to the unit arrangement information and the block information, and the second reference signal configuration information is used by the terminal to receive the reference signal sent by each target block.

Optionally, the second reference signal configuration information may include at least one of: generation information of a reference signal sequence sent by each target block, a serial number of an antenna port occupied by the reference signal sent by each target block, or time-frequency resources occupied by the reference signal sent by each target block.

It may be understood that the basic information (generation information of the reference signal sequence, the serial number of the antenna port occupied by the reference signal, or time-frequency resources occupied by the reference signal) of the reference signal sent by each target block in the aforementioned first reference signal configuration information is the same as the basic information of the reference signal sent by each target block in the aforementioned second reference signal configuration information, and the terminal may receive the reference signal sent by the second network device based on the first reference signal configuration information according to the second reference signal configuration information.

At step 204, first indication information is determined according to the channel feedback information, in which the first indication information is used to determine a phase shift matrix for the second network device.

In an embodiment of the present disclosure, the first network device may determine the first indication information according to the received channel feedback information, and the first indication information may be used to determine the phase shift matrix for the second network device.

In some implementations, the first indication information includes the channel feedback information. The second network device may determine reflection angle information and/or transmission angle information of each target block according to the received first PMI. The second network device may perform an interpolation processing based on the reflection angle information and/or the transmission angle information of each target block to obtain reflection angle information and/or transmission angle information of each block. Furthermore, the second network device may determine the phase shift matrix for the second network device based on the reflection angle information and/or the transmission angle information of each block and incident angle information between the first network device and the second network device.

Furthermore, the phase shift matrix is not quantized, and the second network device may further quantize the phase shift matrix based on a phase offset value supported by itself to obtain the quantized phase shift matrix, i.e. the phase shift matrix actually used by the second network device in the end, and adjust the phase of each unit according to the phase shift matrix.

It may be understood that the phase offset values supported by the second network device are several discrete values rather than continuous values, and the phase of each unit in the second network device is not continuously adjustable.

Optionally, the quantization criterion may be a minimum distance criterion, and the unquantized phase shift matrix is quantized to the supported phase shift value closest to the unquantized phase shift matrix to obtain the quantized phase shift matrix, i.e. the phase shift matrix actually used in the end.

In some implementations, the first indication information includes the channel feedback information and at least one second PMI. The second PMI indicates a precoding matrix for a channel between each block in the second network device that does not send the reference signal and the terminal. The second network device may determine the reflection angle information and/or the transmission angle information of each block according to the first PMI and the second PMI. Furthermore, the second network device may determine the phase shift matrix for the second network device according to the reflection angle information and/or the transmission angle information of each block and the incident angle information between the first network device and the second network device.

Furthermore, the phase shift matrix is not quantized, and the second network device may further quantize the phase shift matrix based on the phase offset value supported by itself to obtain the quantized phase shift matrix, i.e. the phase shift matrix actually used by the second network device in the end, and adjust the phase of each unit according to the phase shift matrix.

Likewise, optionally, the quantization criterion may be a minimum distance criterion.

The determination of the second PMI includes the first network device being capable of determining the reflection angle information and/or the transmission angle information of each target block according to the first PMI. The first network device may perform an interpolation processing based on the reflection angle information and/or the transmission angle information of each target block to obtain the reflection angle information and/or the transmission angle information of each block in the second network device that does not send the reference signal. Furthermore, the second PMI is obtained according to the reflection angle information and/or the transmission angle information of each block in the second network device that does not send the reference signal.

In some implementations, the first indication information includes a third PMI and interpolation configuration information. The third PMI indicates the precoding matrix corresponding to reference reflection and/or transmission angle information when an interpolation processing is performed. The interpolation configuration information is used by the second network device to perform the interpolation processing based on the third PMI. The second network device may perform the interpolation processing based on the third PMI according to the configuration of the interpolation configuration information to obtain the phase shift matrix.

Optionally, the quantization process of the phase shift matrix may be completed by the first network device or by the second network device.

In the case where the quantization process of the phase shift matrix is completed by the first network device, the first network device may determine the reflection angle information and/or the transmission angle information of each target block according to the first PMI, and then perform an interpolation processing based on the reflection angle information and/or the transmission angle information of each target block to obtain the reflection angle information and/or the transmission angle information of a block that does not send the reference signal. The first network device may determine an unquantized phase shift matrix according to the reflection angle information and/or the transmission angle information of each block and the incident angle information between the first network device and the second network device. Furthermore, the first network device may perform a quantization processing on the phase shift matrix based on the phase offset value supported by the second network device to obtain a quantized phase shift matrix. The first network device may determine the third PMI and the interpolation configuration information according to the quantized phase shift matrix, and the second network device may perform an interpolation processing based on the third PMI according to the interpolation configuration information to obtain the quantized phase shift matrix, that is, the second network device may directly obtain the phase shift matrix actually used in the end according to the received third PMI and the received interpolation configuration information.

In the case where the quantization process of the phase shift matrix is completed by the second network device, the first network device may determine the reflection angle information and/or the transmission angle information of each target block according to the first PMI, and then perform an interpolation processing based on the reflection angle information and/or the transmission angle information of each target block to obtain the reflection angle information and/or the transmission angle information of a block that does not send the reference signal. The first network device may determine an unquantized phase shift matrix according to the reflection angle information and/or the transmission angle information of each block and the incident angle information between the first network device and the second network device. The first network device may determine the third PMI and the interpolation configuration information according to the unquantized phase shift matrix, and the second network device may perform an interpolation processing based on the third PMI according to the interpolation configuration information to obtain the unquantized phase shift matrix. Furthermore, the second network device performs a quantization processing on the phase shift matrix based on the phase offset value supported by itself to obtain the quantized phase shift matrix, that is, the phase shift matrix actually used by the second network device in the end.

Likewise, optionally, the quantization criterion may be a minimum distance criterion.

Optionally, the interpolation configuration information may include at least one of: an interpolation slope for a linear interpolation, a difference between a PMI corresponding to each block in the second network device and the third PMI, or an interpolation parameter for a nonlinear interpolation.

Optionally, the interpolation configuration information in a horizontal dimension and the interpolation configuration information in a vertical dimension of the second network device may be the same or different, and may be configured separately.

In each embodiment of the present disclosure, the incident angle information between the first network device and the second network device refers to information of the incident angle of a signal emitted by the first network device and incident on a surface of the second network device.

Optionally, the first network device may send the incident angle information to the second network device, and the second network device may also obtain the incident angle information by performing measurements and estimations by itself.

In each embodiment of the present disclosure, the reflection angle information and/or the transmission angle information of each block in the second network device refers to the reflection angle information and/or the transmission angle information between the second network device and the terminal, that is, the angle information of the signal reflected and/or transmitted to the terminal.

In each embodiment of the present disclosure, the interpolation processing performed may be a linear interpolation or a nonlinear interpolation.

At step 205, the first indication information is sent to the second network device.

In an embodiment of the present disclosure, after determining the first indication information, the first network device may send the first indication information to the second network device, and the second network device may determine the phase shift matrix according to the first indication information.

The quantized phase shift matrix is used to configure the phase of each unit in the second network device, that is, to precode the second network device. The second network device may adjust the phase of each unit therein according to the phase shift matrix configuration to implement the precoding of the second network device, and may reflect and/or transmit the signal incident on the surface of the second network device.

In summary, by acquiring unit arrangement information and block information of a second network device, in which the block information indicates a plurality of blocks in the second network device; determining at least one target block for sending a reference signal from the plurality of blocks in the second network device; receiving channel feedback information sent by a terminal, in which the channel feedback information is determined by the terminal based on the reference signal sent by the at least one target block; determining first indication information according to the channel feedback information, in which the first indication information is used to determine a phase shift matrix for the second network device; and sending the first indication information to the second network device, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

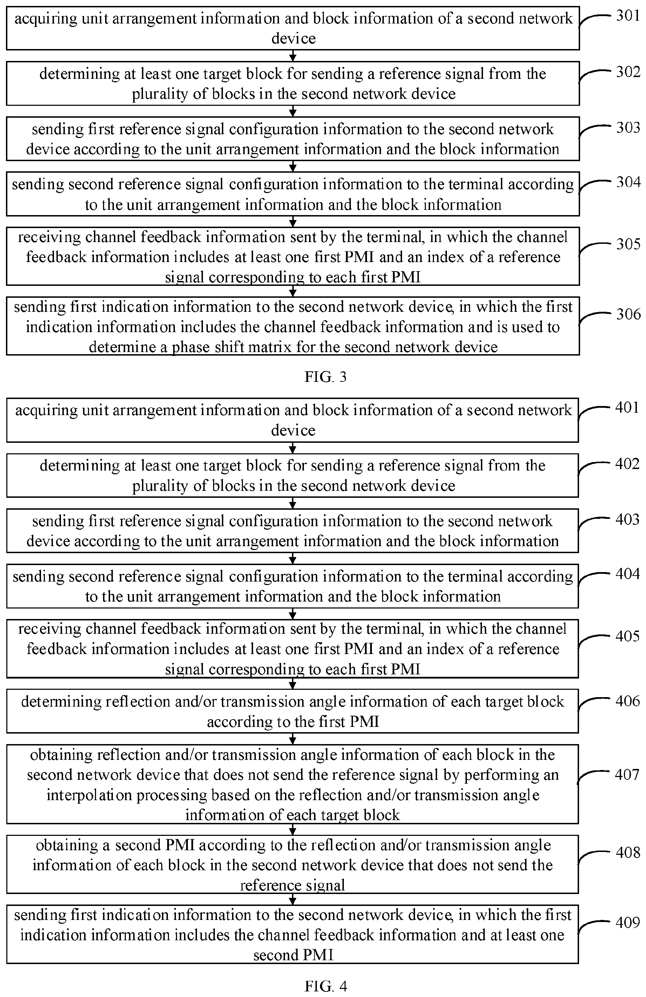

Reference is made to FIG. 3, which is a schematic flowchart of a precoding method based on an RIS provided in an embodiment of the present disclosure. It should be noted that the precoding method based on the RIS in this embodiment of the present disclosure is performed by a first network device. This method may be executed independently or in combination with any one of other embodiments of the present disclosure. As shown in FIG. 3, the method may include, but is not limited to, the following steps.

At step 301, unit arrangement information and block information of a second network device are acquired.

It should be noted that in each embodiment of the present disclosure, the second network device may be an RIS.

In an embodiment of the present disclosure, the first network device may acquire unit arrangement information and block information of the second network device, in which the block information of the second network device indicates a plurality of blocks in the second network device, and the unit arrangement information of the second network device may indicate how the units in the second network device are arranged.

It should be noted that each block in the second network device is a continuous portion of the second network device, such as a continuous RIS surface in the RIS.

It may be understood that the first network device may determine how the units in the second network device are arranged by acquiring the unit arrangement information of the second network device, and the first network device may determine each block in the second network device by acquiring the block information of the second network device.

In some implementations, the unit arrangement information may include at least one of: a row number of units in the second network device; a column number of units in the second network device; a row spacing of units in the second network device; a column spacing of units in the second network device; direction information of the second network device, such as the normal direction of the second network device, or the like; or a unit in the second network device capable of sending a reference signal, which may also be an active unit in the second network device.

In some implementations, the block information may include at least one of: the number of rows of units included in each block, the number of columns of units included in each block, and a center unit of each block.

It may be understood that the unit arrangement information and the block information of the second network device may be flexibly configured according to the specific shape of the second network device or the like. For example, if the second network device is circular in shape, the unit arrangement information of the second network device may further include the radius or diameter of the second network device and the like, and the block information may also include other information to indicate each block in the second network device.

In an embodiment of the present disclosure, the first network device may receive the unit arrangement information and/or block information reported by the second network device, or the first network device may acquire the unit arrangement information and/or block information of the second network device in an offline stage.

In some implementations, the first network device may also configure a plurality of blocks in the second network device according to the unit arrangement information of the second network device to obtain the block information of the second network device.

Optionally, each block in the second network device may send the reference signal.

At step 302, at least one target block for sending a reference signal is determined from the plurality of blocks in the second network device.

In an embodiment of the present disclosure, the first network device may determine at least one target block from the plurality of blocks in the second network device, and the at least one target block is used to send a reference signal to the terminal.

In an embodiment of the present disclosure, the first network device may determine the at least one target block from the plurality of blocks in the second network device in a variety of ways, and may configure the reference signal for the at least one target block.

As an example, for example, the first network device may select P blocks at equal intervals in a horizontal direction of the second network device, and Q blocks at equal intervals in a vertical direction of the second network device as the target blocks, and so on.

At step 303, first reference signal configuration information is sent to the second network device according to the unit arrangement information and the block information.

In an embodiment of the present disclosure, the first network device may send first reference signal configuration information to the second network device, in which the first reference signal configuration information is used to determine a reference signal sent by each target block in the second network device. The second network device may send the reference signal to the terminal on the at least one target block according to the first reference signal configuration information.

Optionally, the first reference signal configuration information includes at least one of: a unit in the target block occupied by the reference signal sent by each target block, generation information of a reference signal sequence sent by each target block, a serial number of an antenna port occupied by the reference signal sent by each target block, or time-frequency resources occupied by the reference signal sent by each target block.

At step 304, second reference signal configuration information is sent to the terminal according to the unit arrangement information and the block information.

In an embodiment of the present disclosure, the first network device may send second reference signal configuration information to the terminal, in which the second reference signal configuration information is used by the terminal to receive the reference signal sent by each target block in the second network device.

In an embodiment of the present disclosure, the second reference signal configuration information may be the same as or different from the first reference configuration information. For example, the second reference signal configuration information may not include a unit in the block occupied by the reference signal sent by each target block.

Optionally, the second reference signal configuration information may include at least one of: generation information of a reference signal sequence sent by each target block, a serial number of an antenna port occupied by the reference signal sent by each target block, or time-frequency resources occupied by the reference signal sent by each target block.

It may be understood that the basic information (generation information of the reference signal sequence, the serial number of the antenna port occupied by the reference signal, or time-frequency resources occupied by the reference signal) of the reference signal sent by each target block in the aforementioned first reference signal configuration information is the same as the basic information of the reference signal sent by each target block in the aforementioned second reference signal configuration information, and the terminal may receive the reference signal sent by the second network device based on the first reference signal configuration information according to the second reference signal configuration information.

It should be noted that, similarly, the channel used by the first network device to send the reference signal configuration information to the terminal may be a channel passing through the second network device or a direct line-of-sight channel not passing through the second network device, which is not limited herein in the present disclosure.

At step 305, channel feedback information sent by a terminal is received, in which the channel feedback information includes at least one first PMI and an index of a reference signal corresponding to each first PMI.

In an embodiment of the present disclosure, the first network device may receive channel feedback information sent by the terminal, in which the channel feedback information is determined by the terminal based on the reference signal sent by the at least one target block. The channel feedback information may reflect the state of the channel between each target block in the second network device and the terminal.

The first PMI indicates a precoding matrix for a channel between each target block in the second network device and the terminal.

It may be understood that each target block sends a reference signal to the terminal, and the terminal receives the reference signal sent by each target block and performs estimations to obtain the precoding matrix for the channel between each target block and the terminal. The precoding matrix for the channel between each target block and the terminal is indicated by one first PMI, and the reference signal sent by the target block is indicated by the index of the reference signal corresponding to the first PMI.

Optionally, the precoding matrix indicated by the PMI included in the channel feedback information is an optimal precoding matrix selected by the terminal based on a twodimensional discrete Fourier transform (DFT) codebook.

It should be noted that, similarly, the channel used by the first network device to receive the channel feedback information sent by the terminal may be a channel passing through the second network device or a direct line-of-sight channel not passing through the second network device, which is not limited herein in the present disclosure.

At step 306, first indication information is sent to the second network device, in which the first indication information includes the channel feedback information, and the first indication information is used to determine a phase shift matrix for the second network device.

In an embodiment of the present disclosure, the first indication information for determining the phase shift matrix sent by the first network device to the second network device includes the channel feedback information. The second network device may determine reflection angle information and/or transmission angle information of each target block according to the received first PMI. The second network device may perform an interpolation processing based on the reflection angle information and/or the transmission angle information of each target block to obtain reflection angle information and/or transmission angle information of each block. Furthermore, the second network device may determine the phase shift matrix for the second network device based on the reflection angle information and/or the transmission angle information of each block and incident angle information between the first network device and the second network device.

Furthermore, the phase shift matrix is not quantized, and the second network device may further quantize the phase shift matrix based on a phase offset value supported by itself to obtain the quantized phase shift matrix, i.e. the phase shift matrix actually used by the second network device in the end, and adjust the phase of each unit according to the phase shift matrix.

It may be understood that the phase offset values supported by the second network device are several discrete values rather than continuous values, and the phase of each unit in the second network device is not continuously adjustable.

Optionally, the quantization criterion may be a minimum distance criterion, and the unquantized phase shift matrix is quantized to the supported phase shift value closest to the unquantized phase shift matrix to obtain the quantized phase shift matrix, i.e. the phase shift matrix actually used in the end.

In each embodiment of the present disclosure, the incident angle information between the first network device and the second network device refers to information of the incident angle of a signal emitted by the first network device and incident on a surface of the second network device.

Optionally, the first network device may send the incident angle information to the second network device, and the second network device may also obtain the incident angle information by performing measurements and estimations by itself.

In each embodiment of the present disclosure, the reflection angle information and/or the transmission angle information of each block in the second network device refers to the reflection angle information and/or the transmission angle information between the second network device and the terminal, that is, the angle information of the signal reflected and/or transmitted to the terminal.

In each embodiment of the present disclosure, the interpolation processing performed may be a linear interpolation or a nonlinear interpolation.

In an embodiment of the present disclosure, the quantized phase shift matrix finally determined is used to configure the phase of each unit in the second network device, that is, to precode the second network device. The second network device may adjust the phase of each unit therein according to the phase shift matrix configuration to implement the precoding of the second network device, and may reflect and/or transmit the signal incident on the surface of the second network device.

In summary, by acquiring unit arrangement information and block information of a second network device; determining at least one target block for sending a reference signal from the plurality of blocks in the second network device; sending first reference signal configuration information to the second network device according to the unit arrangement information and the block information; sending second reference signal configuration information to the terminal according to the unit arrangement information and the block information; receiving channel feedback information sent by the terminal; and sending first indication information to the second network device, in which the first indication information includes the channel feedback information and is used to determine a phase shift matrix for the second network device, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

Reference is made to FIG. 4, which is a schematic flowchart of a precoding method based on an RIS provided in an embodiment of the present disclosure. It should be noted that the precoding method based on the RIS in this embodiment of the present disclosure is performed by a first network device. This method may be executed independently or in combination with any one of other embodiments of the present disclosure. As shown in FIG. 4, the method may include, but is not limited to, the following steps.

At step 401, unit arrangement information and block information of a second network device are acquired.

At step 402, at least one target block for sending a reference signal is determined from a plurality of blocks in the second network device.

At step 403, first reference signal configuration information is sent to the second network device according to the unit arrangement information and the block information.

At step 404, second reference signal configuration information is sent to the terminal according to the unit arrangement information and the block information.

At step 405, channel feedback information sent by a terminal is received, in which the channel feedback information includes at least one first PMI and an index of a reference signal corresponding to each first PMI.

In an embodiment of the present disclosure, steps 401 to 405 may be implemented in any one of the ways in the embodiments of the present disclosure respectively, which is not limited in the embodiments of the present disclosure and will not be elaborated.

At step 406, reflection angle information and/or transmission angle information of each target block are/is determined according to the first PMI.

In an embodiment of the present disclosure, the first network device may determine the reflection angle information and/or the transmission angle information of each target block where the reference signal is located (the target block that sends the reference signal) based on the first PMI fed back by the terminal.

At step 407, reflection angle information and/or transmission angle information of each block in the second network device that does not send the reference signal is obtained by performing an interpolation processing based on the reflection angle information and/or the transmission angle information of each target block.

In an embodiment of the present disclosure, the first network device may perform the interpolation processing based on the reflection angle information and/or the transmission angle information of each target block to obtain the reflection angle information and/or the transmission angle information of each remaining block in the second network device that does not send the reference signal.

In each embodiment of the present disclosure, the interpolation processing performed may be a linear interpolation or a nonlinear interpolation.

In an embodiment of the present disclosure, the parameters used when performing the interpolation processing on the blocks in the horizontal dimension and the blocks in the vertical dimension of the second network device may be the same or different.

The use of the linear interpolation to obtain the reflection angle information of each block is taken as an example. Assuming that a row of the second network device has N (1, 2, ..., N) blocks, where the $m^{th}$ and $n^{th}$ blocks are two target blocks, and the reflection angle information obtained according to the first PMI corresponding to the $m^{th}$ block and the reflection angle information obtained according to the first PMI corresponding to the $n^{th}$ block are $\alpha_m, \alpha_n$ respectively, then

the reflection angle information $\alpha_k$ of the $k^{th}$ block in the row is $\alpha_k = \alpha_m + (k - m)\frac{\alpha_n - \alpha_m}{m - n}$ .

It may be understood that the above example is only specifically described as an example of using the linear interpolation to obtain the reflection angle information of each block. Other linear interpolation parameters may also be used for the interpolation processing, and nonlinear interpolation methods may also be used for the interpolation processing, etc. The way for the interpolation processing is not limited herein in the embodiments of the present disclosure.

At step 408, a second PMI is obtained according to the reflection angle information and/or the transmission angle information of each block in the second network device that does not send the reference signal.

In an embodiment of the present disclosure, the first network device may obtain the second PMI according to the reflection angle information and/or the transmission angle information of each block in the second network device that does not send the reference signal which are/is obtained after the interpolation processing. The second PMI may indicate a precoding matrix of a channel between each block in the second network device that does not send the reference signal and the terminal.

At step 409, first indication information is sent to the second network device, in which the first indication information includes the channel feedback information and at least one second PMI.

In an embodiment of the present disclosure, the first network device may send first indication information to the second network device, in which the first indication information includes the channel feedback information and at least one second PMI. The second network device may determine the reflection angle information and/or the transmission angle information of each block according to the first PMI and the second PMI. Furthermore, the second network device may determine the phase shift matrix for the second network device according to the reflection angle information and/or the transmission angle information of each block and incident angle information between the first network device and the second network device.

Furthermore, the phase shift matrix is not quantized, and the second network device may further quantize the phase shift matrix based on the phase offset value supported by itself to obtain the quantized phase shift matrix, that is, the phase shift matrix actually used by the second network device in the end, and adjust the phase of each unit according to the phase shift matrix.

Optionally, the quantization criterion may be a minimum distance criterion, and the unquantized phase shift matrix is quantized to the supported phase shift value closest to the unquantized phase shift matrix to obtain the quantized phase shift matrix, i.e. the phase shift matrix actually used in the end.

In each embodiment of the present disclosure, the incident angle information between the first network device and the second network device refers to information of the incident angle of a signal emitted by the first network device and incident on a surface of the second network device.

In each embodiment of the present disclosure, the reflection angle information and/or the transmission angle information of each block in the second network device refers to the reflection angle information and/or the transmission angle information between the second network device and the terminal, that is, the angle information of the signal reflected and/or transmitted to the terminal.

In an embodiment of the present disclosure, the quantized phase shift matrix finally determined is used to configure the phase of each unit in the second network device, that is, to precode the second network device. The second network device may adjust the phase of each unit therein according to the phase shift matrix configuration to implement the precoding of the second network device, and may reflect and/or transmit the signal incident on the surface of the second network device.

In summary, by acquiring unit arrangement information and block information of a second network device; determining at least one target block for sending a reference signal from the plurality of blocks in the second network device; sending first reference signal configuration information to the second network device according to the unit arrangement information and the block information; sending second reference signal configuration information to a terminal according to the unit arrangement information and the block information; receiving channel feedback information sent by the terminal; determining reflection angle information and/or transmission angle information of each target block according to the first PMI; obtaining reflection angle information and/or transmission angle information of each block in the second network device that does not send the reference signal by performing an interpolation processing based on the reflection angle information and/or the transmission angle information of each target block; obtaining a second PMI according to the reflection angle information and/or the transmission angle information of each block in the second network device that does not send the reference signal; and sending first indication information to the second network device, in which the first indication information includes the channel feedback information and at least one second PMI, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

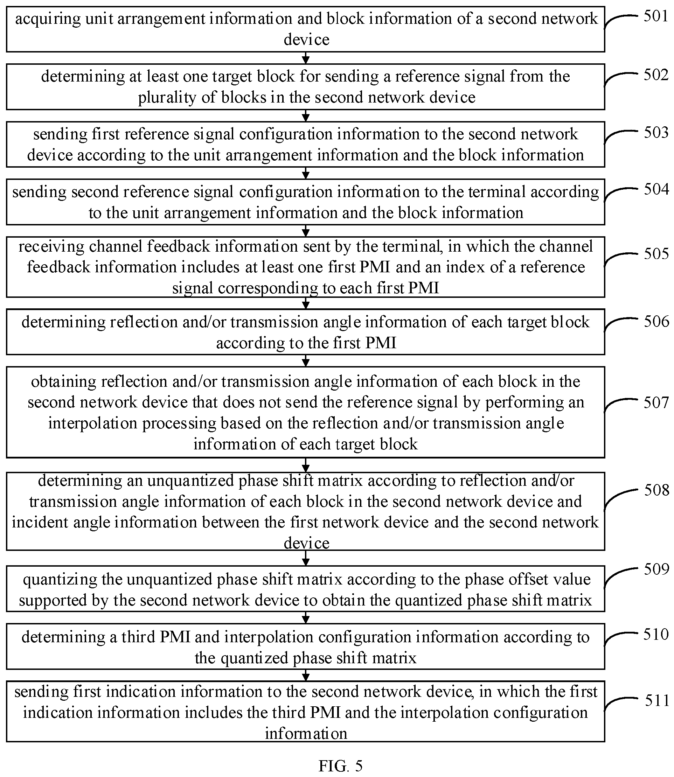

Reference is made to FIG. 5, which is a schematic flowchart of a precoding method based on an RIS provided in an embodiment of the present disclosure. It should be noted that the precoding method based on the RIS in this embodiment of the present disclosure is performed by a first network device. This method may be executed independently or in combination with any one of other embodiments of the present disclosure. As shown in FIG. 5, the method may include, but is not limited to, the following steps.

At step 501, unit arrangement information and block information of a second network device are acquired.

At step 502, at least one target block for sending a reference signal is determined from a plurality of blocks in the second network device.

At step 503, first reference signal configuration information is sent to the second network device according to the unit arrangement information and the block information.

At step 504, second reference signal configuration information is sent to the terminal according to the unit arrangement information and the block information.

At step 505, channel feedback information sent by a terminal is received, in which the channel feedback information includes at least one first PMI and an index of a reference signal corresponding to each first PMI.

At step 506, reflection angle information and/or transmission angle information of each target block are/is determined according to the first PMI.

At step 507, reflection angle information and/or transmission angle information of each block in the second network device that does not send the reference signal is obtained by performing an interpolation processing based on the reflection angle information and/or the transmission angle information of each target block.

In an embodiment of the present disclosure, steps 501 to 507 may be implemented in any one of the ways in the embodiments of the present disclosure respectively, which is not limited in the embodiments of the present disclosure and will not be elaborated.

At step 508, an unquantized phase shift matrix is determined according to reflection angle information and/or transmission angle information of each block in the second network device and incident angle information between the first network device and the second network device.

In an embodiment of the present disclosure, the first network device may determine an unquantized phase shift matrix according to the reflection angle information and/or the transmission angle information of each block in the second network device and the incident angle information between the first network device and the second network device, after performing the interpolation processing based on the reflection angle information and/or the transmission angle information of each target block to obtain the reflection angle information and/or the transmission angle information of each remaining block that does not send the reference signal.

As an example, the reference unit and the reference direction of the second network device are determined. By taking a square second network device including $M \times N$ blocks as an example, the directions parallel to the length and the width are the reference directions in the horizontal dimension and the vertical dimension, respectively, and the incident angles in the horizontal dimension and the vertical dimension from the first network device to the second network device are $\beta_h$ and $\beta_v$, respectively. In order to make up for the path difference caused by the incident angle, the beam vectors $\beta_h$ and $\beta_v$ in the horizontal dimension and the vertical dimension are:

$$b_h = [1, e^{j\frac{2\pi}{\lambda}dcos\beta_h}, e^{j\frac{2\pi}{\lambda}2dcos\beta_h}, \cdots, e^{j\frac{2\pi}{\lambda}Ndcos\beta_h}]$$

$$b_v = [1, e^{j\frac{2\pi}{\lambda}dcos\beta_v}, e^{j\frac{2\pi}{\lambda}2dcos\beta_v}, \cdots, e^{j\frac{2\pi}{\lambda}Mdcos\beta_v}]$$

The reflection angle information of a block in the ith row and jth column of the second network device is $\alpha_{i,j}$, and the reflection phase shift matrix for the second network device is:

$$a = \begin{bmatrix} \alpha_{1,1} & \alpha_{1,2} & \cdots & \alpha_{1,N} \\ \alpha_{2,1} & \alpha_{2,2} & \cdots & \alpha_{2,N} \\ \vdots & \vdots & \ddots & \vdots \\ \alpha_{M,1} & \alpha_{M,2} & \cdots & \alpha_{M,N} \end{bmatrix}$$

The determined unquantized phase shift matrix $\Theta$ is $\Theta = (b_v^T \times b_h) \odot a$, where $\odot$ is the Hadamard product.

It may be understood that the above method for determining the unquantized phase shift matrix for the second network device is shown only as an example, and other methods may also be used to determine the unquantized phase shift matrix based on the reflection angle information and/or the transmission angle information of each block in the second network device and the incident angle information between the first network device and the second network device.

At step 509, the unquantized phase shift matrix is quantized according to a phase offset value supported by the second network device to obtain the quantized phase shift matrix.

In each embodiment of the present disclosure, the first network device may quantize the unquantized phase shift matrix based on a phase offset value supported by the second network device to obtain the quantized phase shift matrix.

It may be understood that the phase offset values supported by the second network device are several discrete values rather than continuous values, and the phase of each unit in the second network device is not continuously adjustable.

Optionally, the quantization criterion may be a minimum distance criterion, and the unquantized phase shift matrix is quantized to the supported phase shift value closest to the unquantized phase shift matrix to obtain the quantized phase shift matrix, i.e. the phase shift matrix actually used by the second network device in the end.

In each embodiment of the present disclosure, the incident angle information between the first network device and the second network device refers to information of the incident angle of a signal emitted by the first network device and incident on a surface of the second network device.

In each embodiment of the present disclosure, the reflection angle information and/or the transmission angle information of each block in the second network device refers to the reflection angle information and/or the transmission angle information between the second network device and the terminal, that is, the angle information of the signal reflected and/or transmitted to the terminal.

At step 510, a third PMI and interpolation configuration information are determined according to the quantized phase shift matrix.

In an embodiment of the present disclosure, the first network device may determine the third PMI and the interpolation configuration information according to the quantized phase shift matrix.

The third PMI indicates a precoding matrix corresponding to reference reflection and/or transmission angle information in case that an interpolation processing is performed. The interpolation configuration information is used by the second network device to perform the interpolation processing based on the third PMI. The second network device may perform the interpolation processing based on the third PMI according to the configuration of the interpolation configuration information to obtain the quantized phase shift matrix.

Optionally, the interpolation configuration information may include at least one of: an interpolation slope for a linear interpolation, a difference between a PMI corresponding to each block in the second network device and the third PMI, or an interpolation parameter for a nonlinear interpolation.

Optionally, the interpolation configuration information in the horizontal dimension and the interpolation configuration information in the vertical dimension of the second network device may be the same or different, and may be configured separately.

At step 511, first indication information is sent to the second network device, in which the first indication information includes the third PMI and the interpolation configuration information.

In an embodiment of the present disclosure, the first network device may send first indication information to the second network device, in which the first indication information includes the third PMI and the interpolation configuration information. The second network device may perform the interpolation processing based on the third PMI according to the configuration of the interpolation configuration information to obtain the quantized phase shift matrix.

In an embodiment of the present disclosure, the quantized phase shift matrix finally determined is used to configure the phase of each unit in the second network device, that is, to precode the second network device. The second network device may adjust the phase of each unit therein according to the phase shift matrix configuration to implement the precoding of the second network device, and may reflect and/or transmit the signal incident on the surface of the second network device.

In summary, by acquiring unit arrangement information and block information of a second network device; determining at least one target block for sending a reference signal from the plurality of blocks in the second network device; sending first reference signal configuration information to the second network device according to the unit arrangement information and the block information; sending second reference signal configuration information to a terminal according to the unit arrangement information and the block information; receiving channel feedback information sent by the terminal; determining reflection angle information and/or transmission angle information of each target block according to the first PMI; obtaining reflection angle information and/or transmission angle information of each block in the second network device that does not send the reference signal by performing an interpolation processing based on the reflection angle information and/or the transmission angle information of each target block; determining an unquantized phase shift matrix according to reflection angle information and/or transmission angle information of each block in the second network device and incident angle information between the first network device and the second network device; quantizing the unquantized phase shift matrix according to the phase offset value supported by the second network device to obtain the quantized phase shift matrix; determining a third PMI and interpolation configuration information according to the quantized phase shift matrix; and sending first indication information to the second network device, in which the first indication information includes the third PMI and the interpolation configuration information, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

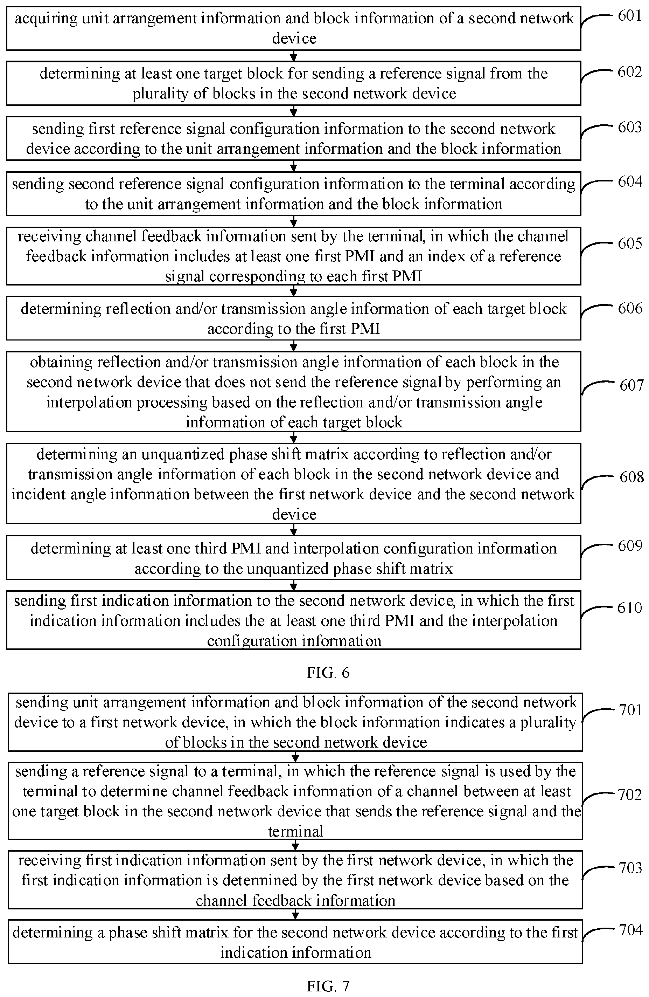

Reference is made to FIG. 6, which is a schematic flowchart of a precoding method based on an RIS provided in an embodiment of the present disclosure. It should be noted that the precoding method based on the RIS in this embodiment of the present disclosure is performed by a first network device. This method may be executed independently or in combination with any one of other embodiments of the present disclosure. As shown in FIG. 6, the method may include, but is not limited to, the following steps.

At step 601, unit arrangement information and block information of a second network device are acquired.

At step 602, at least one target block for sending a reference signal is determined from a plurality of blocks in the second network device.

At step 603, first reference signal configuration information is sent to the second network device according to the unit arrangement information and the block information.

At step 604, second reference signal configuration information is sent to the terminal according to the unit arrangement information and the block information.

At step 605, channel feedback information sent by a terminal is received, in which the channel feedback information includes at least one first PMI and an index of a reference signal corresponding to each first PMI.

At step 606, reflection angle information and/or transmission angle information of each target block are/is determined according to the first PMI.

At step 607, reflection angle information and/or transmission angle information of each block in the second network device that does not send the reference signal is obtained by performing an interpolation processing based on the reflection angle information and/or the transmission angle information of each target block.

At step 608, an unquantized phase shift matrix is determined according to reflection angle information and/or transmission angle information of each block in the second network device and incident angle information between the first network device and the second network device.

In an embodiment of the present disclosure, steps 601 to 608 may be implemented in any one of the ways in the embodiments of the present disclosure respectively, which is not limited in the embodiments of the present disclosure and will not be elaborated.

At step 609, a third PMI and interpolation configuration information are determined according to the unquantized phase shift matrix.

In an embodiment of the present disclosure, the first network device may determine the third PMI and the interpolation configuration information according to the unquantized phase shift matrix determined.

The third PMI indicates a precoding matrix corresponding to reference reflection and/or transmission angle information in case that an interpolation processing is performed. The interpolation configuration information is used by the second network device to perform the interpolation processing based on the third PMI. The second network device may perform the interpolation processing based on the third PMI according to the configuration of the interpolation configuration information to obtain the unquantized phase shift matrix.

Optionally, the interpolation configuration information may include at least one of: an interpolation slope for a linear interpolation, a difference between a PMI corresponding to each block in the second network device and the third PMI, or an interpolation parameter for a nonlinear interpolation.

Optionally, the interpolation configuration information in a horizontal dimension and the interpolation configuration information in a vertical dimension of the second network device may be the same or different, and may be configured separately.

At step 610, first indication information is sent to the second network device, in which the first indication information includes the third PMI and the interpolation configuration information.

In an embodiment of the present disclosure, the first network device may send first indication information to the second network device, in which the first indication information includes the third PMI and the interpolation configuration information. The second network device may perform the interpolation processing based on the third PMI according to the configuration of the interpolation configuration information to obtain the unquantized phase shift matrix. Furthermore, the second network device may quantize the phase shift matrix based on a phase offset value supported by itself to obtain the quantized phase shift matrix, i. e. the phase shift matrix actually used by the second network device in the end.

In an embodiment of the present disclosure, the quantized phase shift matrix finally determined is used to configure the phase of each unit in the second network device, that is, to precode the second network device. The second network device may adjust the phase of each unit therein according to the phase shift matrix configuration to implement the precoding of the second network device, and may reflect and/or transmit the signal incident on the surface of the second network device.

In summary, by acquiring unit arrangement information and block information of a second network device; determining at least one target block for sending a reference signal from the plurality of blocks in the second network device; sending first reference signal configuration information to the second network device according to the unit arrangement information and the block information; sending second reference signal configuration information to a terminal according to the unit arrangement information and the block information; receiving channel feedback information sent by the terminal; determining reflection angle information and/or transmission angle information of each target block according to the first PMI; obtaining reflection angle information and/or transmission angle information of each block in the second network device that does not send the reference signal by performing an interpolation processing based on the reflection angle information and/or the transmission angle information of each target block; determining an unquantized phase shift matrix according to reflection angle information and/or transmission angle information of each block in the second network device and incident angle information between the first network device and the second network device; determining a third PMI and interpolation configuration information according to the unquantized phase shift matrix; and sending first indication information to the second network device, in which the first indication information includes the third PMI and the interpolation configuration information, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

Reference is made to FIG. 7, which is a schematic flowchart of a precoding method based on an RIS provided in an embodiment of the present disclosure. It should be noted that the precoding method based on the RIS in this embodiment of the present disclosure is performed by a second network device. This method may be executed independently or in combination with any one of other embodiments of the present disclosure. As shown in FIG. 7, the method may include, but is not limited to, the following steps.

At step 701, unit arrangement information and block information of the second network device are sent to a first network device, in which the block information indicates a plurality of blocks in the second network device.

It should be noted that in each embodiment of the present disclosure, the second network device may be an RIS.

In an embodiment of the present disclosure, the second network device may send unit arrangement information and block information of the second network device to the first network device, in which the block information of the second network device indicates a plurality of blocks in the second network device, and the unit arrangement information of the second network device may indicate how the units in the second network device are arranged.

It should be noted that each block in the second network device is a continuous portion of the second network device, such as a continuous RIS surface in the RIS.

It may be understood that the first network device may determine how the units in the second network device are arranged by acquiring the unit arrangement information of the second network device, and the first network device may determine each block in the second network device by acquiring the block information of the second network device.

In some implementations, the unit arrangement information may include at least one of: a row number of units in the second network device; a column number of units in the second network device; a row spacing of units in the second network device; a column spacing of units in the second network device; direction information of the second network device, such as the normal direction of the second network device, or the like; or a unit in the second network device capable of sending a reference signal, which may also be an active unit in the second network device.

In some implementations, the block information may include at least one of: the number of rows of units included in each block, the number of columns of units included in each block, and a center unit of each block.

It may be understood that the unit arrangement information and the block information of the second network device may be flexibly configured according to the specific shape of the second network device or the like. For example, if the second network device is circular in shape, the unit arrangement information of the second network device may further include the radius or diameter of the second network device and the like, and the block information may also include other information to indicate each block in the second network device.

At step 702, a reference signal is sent to a terminal, in which the reference signal is used by the terminal to determine channel feedback information of a channel between at least one target block in the second network device that sends the reference signal and the terminal.

In an embodiment of the present disclosure, at least one target block in the second network device may send a reference signal, in which the reference signal is used by the terminal to determine channel feedback information.

In an embodiment of the present disclosure, each target block in the second network device sends a reference signal. That is, the terminal may receive the reference signal sent by each target block in the second network device, and determine the channel feedback information according to the received reference signal.

The channel feedback information may reflect the state of the channel between each target block in the second network device and the terminal. The first network device may determine first indication information used to determine a phase shift matrix for the second network device based on the channel feedback information.

In some implementations, the channel feedback information includes at least one first PMI and an index of a reference signal corresponding to each first PMI. The first PMI indicates a precoding matrix for a channel between each target block in the second network device and the terminal.

It may be understood that each target block sends a reference signal to the terminal, and the terminal receives the reference signal sent by each target block and performs estimations to obtain the precoding matrix for the channel between each target block and the terminal. The precoding matrix for the channel between each target block and the terminal is indicated by one first PMI, and the reference signal sent by the target block is indicated by the index of the reference signal corresponding to the first PMI.

In some implementations, the second network device may receive first reference signal configuration information sent by the first network device, and the second network device may determine the reference signal sent by each target block in the second network device according to the first reference signal configuration information.

Optionally, the first reference signal configuration information includes at least one of: a unit in the target block occupied by the reference signal sent by each target block, generation information of a reference signal sequence sent by each target block, a serial number of an antenna port occupied by the reference signal sent by each target block, or time-frequency resources occupied by the reference signal sent by each target block.

At step 703, first indication information sent by the first network device is received, in which the first indication information is determined by the first network device based on the channel feedback information.

In an embodiment of the present disclosure, the second network device may receive the first indication information sent by the first network device, and determine the phase shift matrix for the second network device according to the first indication information. The first indication information is determined by the first network device based on the channel feedback information.

In some implementations, the first indication information includes the channel feedback information.

In some implementations, the first indication information includes the channel feedback information and at least one second PMI. The second PMI indicates a precoding matrix for a channel between each block in the second network device that does not send the reference signal and the terminal.

The determination of the second PMI by the first network device specifically includes the first network device being capable of determining the reflection angle information and/or the transmission angle information of each target block according to the first PMI. The first network device may perform an interpolation processing based on the reflection angle information and/or the transmission angle information of each target block to obtain the reflection angle information and/or the transmission angle information of each block in the second network device that does not send the reference signal. Furthermore, the second PMI is obtained according to the reflection angle information and/or the transmission angle information of each block in the second network device that does not send the reference signal.

In some implementations, the first indication information includes a third PMI and interpolation configuration information. The third PMI indicates the precoding matrix corresponding to reference reflection and/or transmission angle information when an interpolation processing is performed. The interpolation configuration information is used by the second network device to perform the interpolation processing based on the third PMI. The third PMI and the interpolation configuration information are determined by the first network device.

Optionally, the interpolation configuration information may include at least one of: an interpolation slope for a linear interpolation, a difference between a PMI corresponding to each block in the second network device and the third PMI, or an interpolation parameter for a nonlinear interpolation.

Optionally, the interpolation configuration information in a horizontal dimension and the interpolation configuration information in a vertical dimension of the second network device may be the same or different, and may be configured separately.

Optionally, the quantization process of the phase shift matrix may be completed by the first network device or by the second network device.

In the case where the quantization process of the phase shift matrix is completed by the first network device, the determination of the third PMI and the interpolation configuration information includes as follows: the first network device may determine the reflection angle information and/or the transmission angle information of each target block according to the first PMI, and then perform an interpolation processing based on the reflection angle information and/or the transmission angle information of each target block to obtain the reflection angle information and/or the transmission angle information of a block that does not send the reference signal. The first network device may determine an unquantized phase shift matrix according to the reflection angle information and/or the transmission angle information of each block and the incident angle information between the first network device and the second network device. Furthermore, the first network device may perform a quantization processing on the phase shift matrix based on the phase offset value supported by the second network device to obtain a quantized phase shift matrix. The first network device may determine the third PMI and the interpolation configuration information according to the quantized phase shift matrix, and the second network device may perform an interpolation processing based on the third PMI according to the interpolation configuration information to obtain the quantized phase shift matrix, that is, the second network device may directly obtain the phase shift matrix actually used in the end according to the received third PMI and the received interpolation configuration information.

In the case where the quantization process of the phase shift matrix is completed by the second network device, the determination of the third PMI and the interpolation configuration information includes as follows: the first network device may determine the reflection angle information and/or the transmission angle information of each target block according to the first PMI, and then perform an interpolation processing based on the reflection angle information and/or the transmission angle information of each target block to obtain the reflection angle information and/or the transmission angle information of a block that does not send the reference signal. The first network device may determine an unquantized phase shift matrix according to the reflection angle information and/or the transmission angle information of each block and the incident angle information between the first network device and the second network device. The first network device may determine the third PMI and the interpolation configuration information according to the unquantized phase shift matrix, and the second network device may perform an interpolation processing based on the third PMI according to the interpolation configuration information to obtain the unquantized phase shift matrix.

At step 704, a phase shift matrix for the second network device is determined according to the first indication information.

In an embodiment of the present disclosure, the second network device may determine the phase shift matrix according to the received first indication information.

In some implementations, the first indication information includes the channel feedback information. The second network device may determine reflection angle information and/or transmission angle information of each target block according to the received first PMI. The second network device may perform an interpolation processing based on the reflection angle information and/or the transmission angle information of each target block to obtain reflection angle information and/or transmission angle information of each block. Furthermore, the second network device may determine an unquantized phase shift matrix for the second network device based on the reflection angle information and/or the transmission angle information of each block and incident angle information between the first network device and the second network device.

Furthermore, the second network device may further quantize the phase shift matrix based on a phase offset value supported by itself to obtain the quantized phase shift matrix, i.e. the phase shift matrix actually used by the second network device in the end, and adjust the phase of each unit according to the phase shift matrix.

It may be understood that the phase offset values supported by the second network device are several discrete values rather than continuous values, and the phase of each unit in the second network device is not continuously adjustable.

In some implementations, the first indication information includes the channel feedback information and at least one second PMI. The second network device may determine the reflection angle information and/or the transmission angle information of each block according to the first PMI and the second PMI. Furthermore, the second network device may determine an unquantized phase shift matrix for the second network device according to the reflection angle information and/or the transmission angle information of each block and the incident angle information between the first network device and the second network device.

Furthermore, the second network device may further quantize the phase shift matrix based on the phase offset value supported by itself to obtain the quantized phase shift matrix, i.e. the phase shift matrix actually used by the second network device in the end, and adjust the phase of each unit according to the phase shift matrix.

In some implementations, the first indication information includes a third PMI and interpolation configuration information.

In the case where the quantization process of the phase shift matrix is completed by the first network device, the second network device may perform an interpolation processing based on reference reflection and/or transmission angle information determined on the basis of the third PMI according to the interpolation configuration information to obtain the quantized phase shift matrix, that is, the second network device may directly obtain the phase shift matrix actually used in the end according to the received third PMI and the received interpolation configuration information.

In the case where the quantization process of the phase shift matrix is completed by the second network device, the second network device may perform an interpolation processing based on reference reflection and/or transmission angle information determined on the basis of the third PMI according to the interpolation configuration information to obtain the unquantized phase shift matrix. Furthermore, the second network device performs a quantization processing on the phase shift matrix based on the phase offset value supported by itself to obtain the quantized phase shift matrix, that is, the phase shift matrix actually used by the second network device in the end.

Optionally, in each embodiment of the present disclosure, the quantization criterion may be a minimum distance criterion, and the unquantized phase shift matrix is quantized to the supported phase shift value closest to the unquantized phase shift matrix to obtain the quantized phase shift matrix, i.e. the phase shift matrix actually used in the end.

In an embodiment of the present disclosure, after determining the quantized phase shift matrix, the second network device may configure and adjust the phase of each unit in the second network device according to the quantized phase shift matrix, and reflect or transmit a signal incident on a surface of the second network device based on the adjusted phase.

In each embodiment of the present disclosure, the incident angle information between the first network device and the second network device refers to information of the incident angle of a signal emitted by the first network device and incident on a surface of the second network device.

Optionally, the first network device may send the incident angle information to the second network device, and the second network device may also obtain the incident angle information by performing measurements and estimations by itself.

In each embodiment of the present disclosure, the reflection angle information and/or the transmission angle information of each block in the second network device refers to the reflection angle information and/or the transmission angle information between the second network device and the terminal, that is, the angle information of the signal reflected and/or transmitted to the terminal.

In each embodiment of the present disclosure, the interpolation processing performed may be a linear interpolation or a nonlinear interpolation.

In summary, by sending unit arrangement information and block information of the second network device to a first network device, in which the block information indicates a plurality of blocks in the second network device; sending a reference signal to a terminal, in which the reference signal is used by the terminal to determine channel feedback information of a channel between at least one target block in the second network device that sends the reference signal and the terminal; receiving first indication information sent by the first network device, in which the first indication information is determined by the first network device based on the channel feedback information; determining a phase shift matrix for the second network device according to the first indication information, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

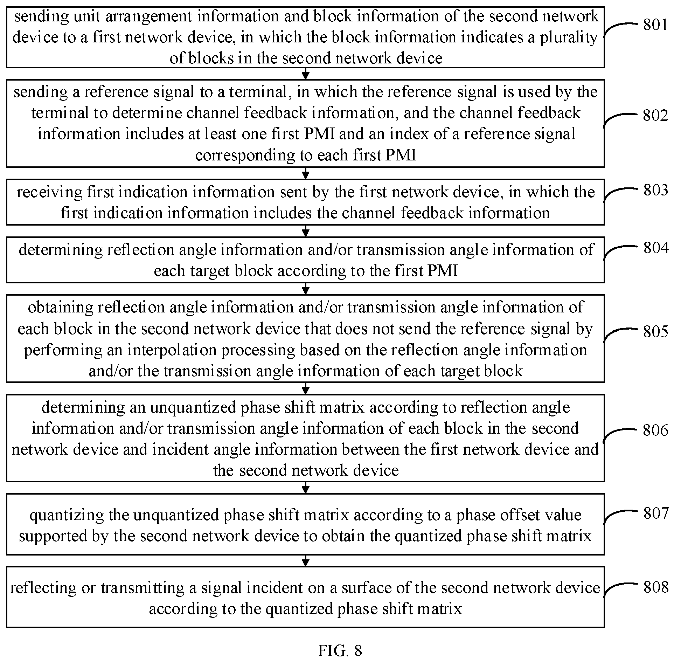

Reference is made to FIG. 8, which is a schematic flowchart of a precoding method based on an RIS provided in an embodiment of the present disclosure. It should be noted that the precoding method based on the RIS in this embodiment of the present disclosure is performed by a second network device. This method may be executed independently or in combination with any one of other embodiments of the present disclosure. As shown in FIG. 8, the method may include, but is not limited to, the following steps.

At step 801, unit arrangement information and block information of the second network device are sent to a first network device, in which the block information indicates a plurality of blocks in the second network device.

It should be noted that in each embodiment of the present disclosure, the second network device may be an RIS.

In an embodiment of the present disclosure, the second network device may send unit arrangement information and block information of the second network device to the first network device, in which the block information of the second network device indicates a plurality of blocks in the second network device, and the unit arrangement information of the second network device may indicate how the units in the second network device are arranged.

It should be noted that each block in the second network device is a continuous portion of the second network device, such as a continuous RIS surface in the RIS.

It may be understood that the first network device may determine how the units in the second network device are arranged by acquiring the unit arrangement information of the second network device, and the first network device may determine each block in the second network device by acquiring the block information of the second network device.

In some implementations, the unit arrangement information may include at least one of: a row number of units in the second network device; a column number of units in the second network device; a row spacing of units in the second network device; a column spacing of units in the second network device; direction information of the second network device, such as the normal direction of the second network device, or the like; or a unit in the second network device capable of sending a reference signal, which may also be an active unit in the second network device.

In some implementations, the block information may include at least one of: the number of rows of units included in each block, the number of columns of units included in each block, and a center unit of each block.

It may be understood that the unit arrangement information and the block information of the second network device may be flexibly configured according to the specific shape of the second network device or the like. For example, if the second network device is circular in shape, the unit arrangement information of the second network device may further include the radius or diameter of the second network device and the like, and the block information may also include other information to indicate each block in the second network device.

At step 802, a reference signal is sent to a terminal, in which the reference signal is used by the terminal to determine channel feedback information, and the channel feedback information includes at least one first PMI and an index of a reference signal corresponding to each first PMI.

In an embodiment of the present disclosure, at least one target block in the second network device may send a reference signal, in which the reference signal is used by the terminal to determine the channel feedback information.

In an embodiment of the present disclosure, each target block in the second network device sends a reference signal. That is, the terminal may receive the reference signal sent by each target block in the second network device, and determine the channel feedback information according to the received reference signal. The channel feedback information includes at least one first PMI and an index of a reference signal corresponding to each first PMI.

The first PMI indicates a precoding matrix for a channel between each target block in the second network device and the terminal.

The channel feedback information may reflect the state of the channel between each target block in the second network device and the terminal. The first network device may determine first indication information used to determine a phase shift matrix for the second network device based on the channel feedback information.

It may be understood that each target block sends a reference signal to the terminal, and the terminal receives the reference signal sent by each target block and performs estimations to obtain the precoding matrix for the channel between each target block and the terminal. The precoding matrix for the channel between each target block and the terminal is indicated by one first PMI, and the reference signal sent by the target block is indicated by the index of the reference signal corresponding to the first PMI.

In some implementations, the second network device may receive first reference signal configuration information sent by the first network device, and the second network device may determine the reference signal sent by each target block in the second network device according to the first reference signal configuration information.

Optionally, the first reference signal configuration information includes at least one of: a unit in the target block occupied by the reference signal sent by each target block, generation information of a reference signal sequence sent by each target block, a serial number of an antenna port occupied by the reference signal sent by each target block, or time-frequency resources occupied by the reference signal sent by each target block.

At step 803, first indication information sent by the first network device is received, in which the first indication information includes the channel feedback information.

In an embodiment of the present disclosure, the second network device may receive the first indication information sent by the first network device, and determine the phase shift matrix for the second network device according to the first indication information. The first indication information includes the channel feedback information. The second network device may determine the phase shift matrix according to the received first PMI.

At step 804, reflection angle information and/or transmission angle information of each target block are/is determined according to the first PMI.

In an embodiment of the present disclosure, the second network device may determine the reflection angle information and/or the transmission angle information of each target block where the reference signal is located (the target block that sends the reference signal) based on the received first PMI and the index of the reference signal corresponding to the first PMI.

In each embodiment of the present disclosure, the reflection angle information and/or the transmission angle information of each block in the second network device refers to the reflection angle information and/or the transmission angle information between the second network device and the terminal, that is, the angle information of the signal reflected and/or transmitted to the terminal.

At step 805, reflection angle information and/or transmission angle information of each block in the second network device that does not send the reference signal is obtained by performing an interpolation processing based on the reflection angle information and/or the transmission angle information of each target block.

In an embodiment of the present disclosure, the second network device may perform the interpolation processing based on the reflection angle information and/or the transmission angle information of each target block to obtain the reflection angle information and/or the transmission angle information of each remaining block in the second network device that does not send the reference signal.

In each embodiment of the present disclosure, the interpolation processing performed may be a linear interpolation or a nonlinear interpolation.

In an embodiment of the present disclosure, the parameters used when performing the interpolation processing on the blocks in the horizontal dimension and the blocks in the vertical dimension of the second network device may be the same or different.

The use of the linear interpolation to obtain the reflection angle information of each block is taken as an example. Assuming that a row of the second network device has N (1, 2, ..., N) blocks, where the $m^{th}$ and $n^{th}$ blocks are two target blocks, and the reflection angle information obtained according to the first PMI corresponding to the $m^{th}$ block and the reflection angle information obtained according to the first PMI corresponding to the $n^{th}$ block are $\alpha_m, \alpha_n$ respectively, then the reflection angle information $\alpha_k$ of the $k^{th}$ block in the row is $\alpha_k = \alpha_m + (\mathrm{k} - \mathrm{m})\dfrac{\alpha_n - \alpha_m}{m-n}$.

It may be understood that the above example is only specifically described as an example of using the linear interpolation to obtain the reflection angle information of each block. Other linear interpolation parameters may also be used for the interpolation processing, and nonlinear interpolation methods may also be used for the interpolation processing, etc. The way for the interpolation processing is not limited herein in the embodiments of the present disclosure.

At step 806, an unquantized phase shift matrix is determined according to reflection angle information and/or transmission angle information of each block in the second network device and incident angle information between the first network device and the second network device.

In an embodiment of the present disclosure, the second network device may determine an unquantized phase shift matrix according to the reflection angle information and/or the transmission angle information of each block in the second network device and the incident angle information between the first network device and the second network device, after performing the interpolation processing based on the reflection angle information and/or the transmission angle information of each target block to obtain the reflection angle information and/or the transmission angle information of each remaining block that does not send the reference signal.

As an example, the reference unit and the reference direction of the second network device are determined. By taking a square second network device including $M{\times}N$ blocks as an example, the directions parallel to the length and the width are the reference directions in the horizontal dimension and the vertical dimension, respectively, and the incident angles in the horizontal dimension and the vertical dimension from the first network device to the second network device are $\beta_h$ and $\beta_v$, respectively. In order to make up for the path difference caused by the incident angle, the beam vectors $\beta_h$ and $\beta_v$ in the horizontal dimension and the vertical dimension are:

$$b_h = \left[1, e^{j\frac{2\pi}{\lambda}dcos\beta_h}, e^{j\frac{2\pi}{\lambda}2dcos\beta_h}, \cdots, e^{j\frac{2\pi}{\lambda}Ndcos\beta_h}\right]$$

$$b_v = \left[1, e^{j\frac{2\pi}{\lambda}dcos\beta_v}, e^{j\frac{2\pi}{\lambda}2dcos\beta_v}, \cdots, e^{j\frac{2\pi}{\lambda}Mdcos\beta_v}\right]$$

The reflection angle information of a block in the $i^{th}$ row and $j^{th}$ column of the second network device is $\alpha_{i,j}$, and the reflection phase shift matrix for the second network device is:

$$a = \begin{bmatrix} \alpha_{1,1} & \alpha_{1,2} & \cdots & \alpha_{1,N} \\ \alpha_{2,1} & \alpha_{2,2} & \cdots & \alpha_{2,N} \\ \vdots & \vdots & \ddots & \vdots \\ \alpha_{M,1} & \alpha_{M,2} & \cdots & \alpha_{M,N} \end{bmatrix}$$

The determined unquantized phase shift matrix $\Theta$ is $\Theta = (b_v^T \times b_h) \odot a$, where $\odot$ is the Hadamard product.

It may be understood that the above method for determining the unquantized phase shift matrix for the second network device is shown only as an example, and other methods may also be used to determine the unquantized phase shift matrix based on the reflection angle information and/or the transmission angle information of each block in the second network device and the incident angle information between the first network device and the second network device.

At step 807, the unquantized phase shift matrix is quantized according to a phase offset value supported by the second network device to obtain the quantized phase shift matrix.

Optionally, the quantization criterion may be a minimum distance criterion, and the unquantized phase shift matrix is quantized to the supported phase shift value closest to the unquantized phase shift matrix to obtain the quantized phase shift matrix, i.e. the phase shift matrix actually used in the end.

It may be understood that the phase offset values supported by the second network device are several discrete values rather than continuous values, and the phase of each unit in the second network device is not continuously adjustable. Therefore, the second network device may quantize the unquantized phase shift matrix based on a phase offset value supported by itself to obtain the quantized phase shift matrix actually used in the end.

At step 808, a signal incident on a surface of the second network device is reflected or sent according to the quantized phase shift matrix.

In an embodiment of the present disclosure, after determining the quantized phase shift matrix, the second network device may configure and adjust the phase of each unit in the second network device according to the quantized phase shift matrix, and reflect or transmit a signal incident on a surface of the second network device based on the adjusted phase.

In summary, by sending unit arrangement information and block information of the second network device to a first network device, in which the block information indicates a plurality of blocks in the second network device; sending a reference signal to a terminal, in which the reference signal is used by the terminal to determine channel feedback information, and the channel feedback information includes at least one first PMI and an index of a reference signal corresponding to each first PMI; receiving first indication information sent by the first network device, in which the first indication information includes the channel feedback information; determining reflection angle information and/or transmission angle information of each target block according to the first PMI; obtaining reflection angle information and/or transmission angle information of each block in the second network device that does not send the reference signal by performing an interpolation processing based on the reflection angle information and/or the transmission angle information of each target block; determining an unquantized phase shift matrix according to reflection angle information and/or transmission angle information of each block in the second network device and incident angle information between the first network device and the second network device; quantizing the unquantized phase shift matrix according to the phase offset value supported by the second network device to obtain the quantized phase shift matrix; and reflecting or transmitting a signal incident on a surface of the second network device according to the quantized phase shift matrix, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

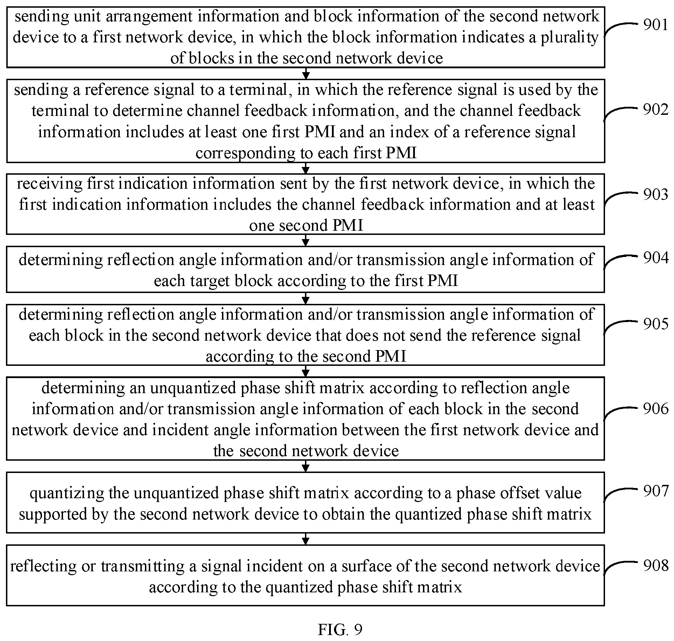

Reference is made to FIG. 9, which is a schematic flowchart of a precoding method based on an RIS provided in an embodiment of the present disclosure. It should be noted that the precoding method based on the RIS in this embodiment of the present disclosure is performed by a second network device. This method may be executed independently or in combination with any one of other embodiments of the present disclosure. As shown in FIG. 9, the method may include, but is not limited to, the following steps.

At step 901, unit arrangement information and block information of the second network device are sent to a first network device, in which the block information indicates a plurality of blocks in the second network device.

At step 902, a reference signal is sent to a terminal, in which the reference signal is used by the terminal to determine channel feedback information, and the channel feedback information includes at least one first PMI and an index of a reference signal corresponding to each first PMI.

At step 903, first indication information sent by the first network device is received, in which the first indication information includes the channel feedback information and at least one second PMI.

In an embodiment of the present disclosure, the second network device may receive first indication information sent by the first network device, and determine the phase shift matrix for the second network device according to the first indication information. The first indication information includes the channel feedback information and at least one second PMI.

The second PMI may indicate a precoding matrix for a channel between each block in the second network device that does not send the reference signal and the terminal.

The determination of the second PMI by the first network device specifically includes the first network device being capable of determining the reflection angle information and/or the transmission angle information of each target block according to the first PMI. The first network device may perform an interpolation processing based on the reflection angle information and/or the transmission angle information of each target block to obtain the reflection angle information and/or the transmission angle information of each block in the second network device that does not send the reference signal. Furthermore, the second PMI is obtained according to the reflection angle information and/or the transmission angle information of each block in the second network device that does not send the reference signal.

At step 904, reflection angle information and/or transmission angle information of each target block are/is determined according to the first PMI.

In an embodiment of the present disclosure, the second network device may determine the reflection angle information and/or the transmission angle information of each target block where the reference signal is located (the target block that sends the reference signal) according to the received first PMI.

At step 905, reflection angle information and/or transmission angle information of each block in the second network device that does not send the reference signal are/is determined according to the second PMI.

In an embodiment of the present disclosure, the second network device may determine reflection angle information and/or transmission angle information of each remaining block in the second network device that does not send the reference signal according to the received second PMI.

It may be understood that after step 904 and step 905, the second network device may determine the reflection angle information and/or the transmission angle information of each block.

At step 906, an unquantized phase shift matrix is determined according to reflection angle information and/or transmission angle information of each block in the second network device and incident angle information between the first network device and the second network device.

At step 907, the unquantized phase shift matrix is quantized according to a phase offset value supported by the second network device to obtain the quantized phase shift matrix.

At step 908, a signal incident on a surface of the second network device is reflected or sent according to the quantized phase shift matrix.

In an embodiment of the present disclosure, steps 901 to 902, and steps 906 to 908 may be implemented in any one of the ways in the embodiments of the present disclosure respectively, which is not limited in the embodiments of the present disclosure and will not be elaborated.

In summary, by sending unit arrangement information and block information of the second network device to a first network device, in which the block information indicates a plurality of blocks in the second network device; sending a reference signal to a terminal, in which the reference signal is used by the terminal to determine channel feedback information, and the channel feedback information includes at least one first PMI and an index of a reference signal corresponding to each first PMI; receiving first indication information sent by the first network device, in which the first indication information includes the channel feedback information and at least one second PMI; determining reflection angle information and/or transmission angle information of each target block according to the first PMI; determining reflection angle information and/or transmission angle information of each block in the second network device that does not send the reference signal according to the second PMI; determining an unquantized phase shift matrix according to reflection angle information and/or transmission angle information of each block in the second network device and incident angle information between the first network device and the second network device; quantizing the unquantized phase shift matrix according to the phase offset value supported by the second network device to obtain the quantized phase shift matrix; and reflecting or transmitting a signal incident on a surface of the second network device according to the quantized phase shift matrix, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

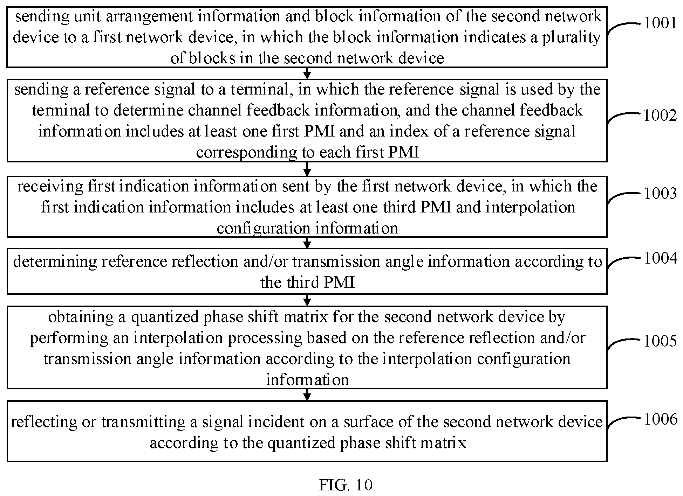

Reference is made to FIG. 10, which is a schematic flowchart of a precoding method based on an RIS provided in an embodiment of the present disclosure. It should be noted that the precoding method based on the RIS in this embodiment of the present disclosure is performed by a second network device. This method may be executed independently or in combination with any one of other embodiments of the present disclosure. As shown in FIG. 10, the method may include, but is not limited to, the following steps.

At step 1001, unit arrangement information and block information of the second network device are sent to a first network device, in which the block information indicates a plurality of blocks in the second network device.

At step 1002, a reference signal is sent to a terminal, in which the reference signal is used by the terminal to determine channel feedback information, and the channel feedback information includes at least one first PMI and an index of a reference signal corresponding to each first PMI.

At step 1003, first indication information sent by the first network device is received, in which the first indication information includes a third PMI and interpolation configuration information.

In an embodiment of the present disclosure, the second network device may receive first indication information sent by the first network device, and determine the phase shift matrix for the second network device according to the first indication information. The first indication information includes a third PMI and interpolation configuration information.

The third PMI indicates a precoding matrix corresponding to reference reflection and/or transmission angle information in case that an interpolation processing is performed. The interpolation configuration information is used by the second network device to perform the interpolation processing based on the third PMI.

Optionally, the interpolation configuration information may include at least one of: an interpolation slope for a linear interpolation, a difference between a PMI corresponding to each block in the second network device and the third PMI, or an interpolation parameter for a nonlinear interpolation.

Optionally, the interpolation configuration information in a horizontal dimension and the interpolation configuration information in a vertical dimension of the second network device may be the same or different, and may be configured separately.

In an embodiment of the present disclosure, the determination of the third PMI and the interpolation configuration information by the first network device specifically includes as follows: the first network device may determine the reflection angle information and/or the transmission angle information of each target block according to the first PMI, and then perform an interpolation processing based on the reflection angle information and/or the transmission angle information of each target block to obtain the reflection angle information and/or the transmission angle information of a block that does not send the reference signal. The first network device may determine an unquantized phase shift matrix according to the reflection angle information and/or the transmission angle information of each block and the incident angle information between the first network device and the second network device. Furthermore, the first network device may perform a quantization processing on the phase shift matrix based on the phase offset value supported by the second network device to obtain a quantized phase shift matrix. The first network device may determine the third PMI and the interpolation configuration information according to the quantized phase shift matrix, and the second network device may perform an interpolation processing based on the third PMI according to the interpolation configuration information to obtain the quantized phase shift matrix, that is, the second network device may directly obtain the phase shift matrix actually used in the end according to the received third PMI and the received interpolation configuration information.

At step 1004, reference reflection and/or transmission angle information are/is determined according to the third PMI.

In an embodiment of the present disclosure, the second network device may determine the reference reflection and/or transmission angle information according to the third PMI, and perform an interpolation processing based on the reference reflection and/or transmission angle information.

At step 1005, a quantized phase shift matrix for the second network device is obtained by performing an interpolation processing based on the reference reflection and/or transmission angle information according to the interpolation configuration information.

In an embodiment of the present disclosure, the second network device may perform an interpolation processing based on the determined reference reflection and/or transmission angle information according to the configuration of the interpolation configuration information to obtain a quantized phase shift matrix.

It may be understood that in an embodiment of the present disclosure, the quantization process of the phase shift matrix is completed in the first network device, and the second network device may directly determine the quantized phase shift matrix according to the received first indication information.

At step 1006, a signal incident on a surface of the second network device is reflected or sent according to the quantized phase shift matrix.

In an embodiment of the present disclosure, steps 1001 to 1002, and step 1006 may be implemented in any one of the ways in the embodiments of the present disclosure respectively, which is not limited in the embodiments of the present disclosure and will not be elaborated.

In summary, by sending unit arrangement information and block information of the second network device to a first network device, in which the block information indicates a plurality of blocks in the second network device; sending a reference signal to a terminal, in which the reference signal is used by the terminal to determine channel feedback information, and the channel feedback information includes at least one first PMI and an index of a reference signal corresponding to each first PMI; receiving first indication information sent by the first network device, in which the first indication information includes a third PMI and interpolation configuration information; determining reference reflection and/or transmission angle information according to the third PMI; obtaining a quantized phase shift matrix for the second network device by performing an interpolation processing based on the reference reflection and/or transmission angle information according to the interpolation configuration information; and reflecting or transmitting a signal incident on a surface of the second network device according to the quantized phase shift matrix, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

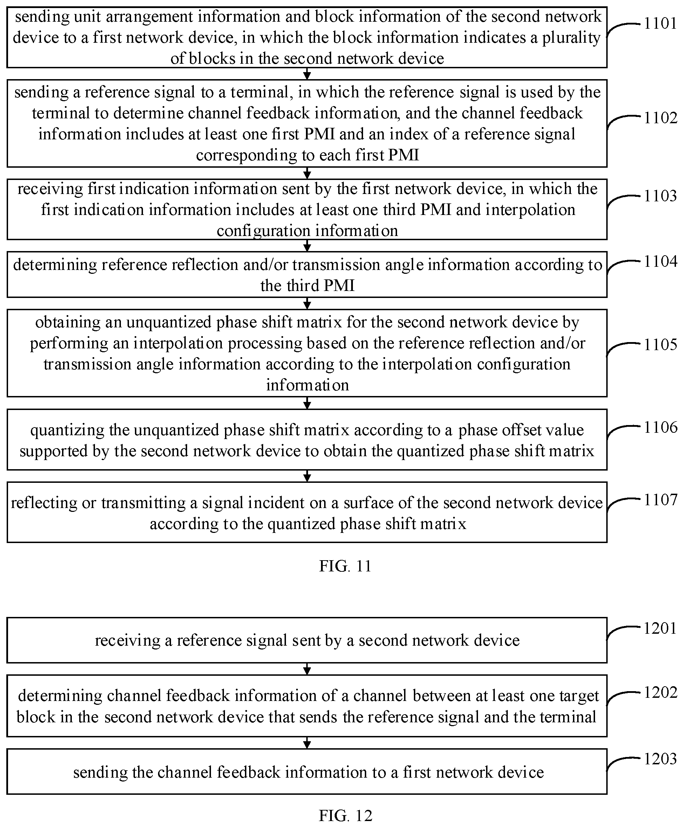

Reference is made to FIG. 11, which is a schematic flowchart of a precoding method based on an RIS provided in an embodiment of the present disclosure. It should be noted that the precoding method based on the RIS in this embodiment of the present disclosure is performed by a second network device. This method may be executed independently or in combination with any one of other embodiments of the present disclosure. As shown in FIG. 11, the method may include, but is not limited to, the following steps.

At step 1101, unit arrangement information and block information of the second network device are sent to a first network device, in which the block information indicates a plurality of blocks in the second network device.

At step 1102, a reference signal is sent to a terminal, in which the reference signal is used by the terminal to determine channel feedback information, and the channel feedback information includes at least one first PMI and an index of a reference signal corresponding to each first PMI.

At step 1103, first indication information sent by the first network device is received, in which the first indication information includes a third PMI and interpolation configuration information.

In an embodiment of the present disclosure, the second network device may receive first indication information sent by the first network device, and determine the phase shift matrix for the second network device according to the first indication information. The first indication information includes a third PMI and interpolation configuration information.

The third PMI indicates a precoding matrix corresponding to reference reflection and/or transmission angle information in case that an interpolation processing is performed. The interpolation configuration information is used by the second network device to perform the interpolation processing based on the third PMI.

Optionally, the interpolation configuration information may include at least one of: an interpolation slope for a linear interpolation, a difference between a PMI corresponding to each block in the second network device and the third PMI, or an interpolation parameter for a nonlinear interpolation.

Optionally, the interpolation configuration information in a horizontal dimension and the interpolation configuration information in a vertical dimension of the second network device may be the same or different, and may be configured separately.

In an embodiment of the present disclosure, the determination of the third PMI and the interpolation configuration information by the first network device specifically includes as follows: the first network device may determine the reflection angle information and/or the transmission angle information of each target block according to the first PMI, and then perform an interpolation processing based on the reflection angle information and/or the transmission angle information of each target block to obtain the reflection angle information and/or the transmission angle information of a block that does not send the reference signal. The first network device may determine an unquantized phase shift matrix according to the reflection angle information and/or the transmission angle information of each block and the incident angle information between the first network device and the second network device. The first network device may determine the third PMI and the interpolation configuration information according to the unquantized phase shift matrix, and the second network device may perform an interpolation processing based on the third PMI according to the interpolation configuration information to obtain the unquantized phase shift matrix.

At step 1104, reference reflection and/or transmission angle information are/is determined according to the third PMI.

In an embodiment of the present disclosure, the second network device may determine the reference reflection and/or transmission angle information according to the third PMI, and perform an interpolation processing based on the reference reflection and/or transmission angle information.

At step 1105, an unquantized phase shift matrix for the second network device is obtained by performing an interpolation processing based on the reference reflection and/or transmission angle information according to the interpolation configuration information.

In an embodiment of the present disclosure, the second network device may perform an interpolation processing based on the determined reference reflection and/or transmission angle information according to the configuration of the interpolation configuration information to obtain an unquantized phase shift matrix.

It may be understood that in an embodiment of the present disclosure, the quantization process of the phase shift matrix needs to be completed in the second network device, and the second network device needs to further quantize the phase shift matrix that may be directly determined according to the received first indication information.

At step 1106, the unquantized phase shift matrix is quantized according to a phase offset value supported by the second network device to obtain the quantized phase shift matrix.

At step 1107, a signal incident on a surface of the second network device is reflected or sent according to the quantized phase shift matrix.

In an embodiment of the present disclosure, steps 1001 to 1002, and steps 1006 to 1007 may be implemented in any one of the ways in the embodiments of the present disclosure respectively, which is not limited in the embodiments of the present disclosure and will not be elaborated.

In summary, by sending unit arrangement information and block information of the second network device to a first network device, in which the block information indicates a plurality of blocks in the second network device; sending a reference signal to a terminal, in which the reference signal is used by the terminal to determine channel feedback information, and the channel feedback information includes at least one first PMI and an index of a reference signal corresponding to each first PMI; receiving first indication information sent by the first network device, in which the first indication information includes a third PMI and interpolation configuration information; determining reference reflection and/or transmission angle information according to the third PMI; obtaining an unquantized phase shift matrix for the second network device by performing an interpolation processing based on the reference reflection and/or transmission angle information according to the interpolation configuration information; quantizing the unquantized phase shift matrix according to a phase offset value supported by the second network device to obtain the quantized phase shift matrix; and reflecting or transmitting a signal incident on a surface of the second network device according to the quantized phase shift matrix, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

Reference is made to FIG. 12, which is a schematic flowchart of a precoding method based on an RIS provided in an embodiment of the present disclosure. It should be noted that the precoding method based on the RIS in this embodiment of the present disclosure is performed by a terminal. This method may be executed independently or in combination with any one of other embodiments of the present disclosure. As shown in FIG. 12, the method may include, but is not limited to, the following steps.

At step 1201, a reference signal sent by a second network device is received.

In an embodiment of the present disclosure, the terminal may receive a reference signal sent by each target block in the second network device, and perform channel estimation based on the reference signal. The reference signal is sent by the second network device based on first reference signal configuration information sent by a first network device.

In each embodiment of the present disclosure, the second network device may be an RIS.

In some implementations, the terminal may receive second reference signal configuration information sent by the first network device, and receive the reference signal sent by the second network device according to the second reference signal configuration information.

Optionally, the second reference signal configuration information includes at least one of: generation information of a reference signal sequence sent by each target block, a serial number of an antenna port occupied by the reference signal sent by each target block, or time-frequency resources occupied by the reference signal sent by each target block.

It should be noted that, the channel used by the terminal to receive the reference signal configuration information sent by the first network device may be a channel passing through the second network device or a direct line-of-sight channel not passing through the second network device, which is not limited herein in the present disclosure.

At step 1202, channel feedback information of a channel between at least one target block in the second network device that sends the reference signal and the terminal is determined according to the reference signal.

In an embodiment of the present disclosure, the terminal may estimate the channel between at least one target block that sends the reference signal in the second network device and the terminal based on the reference signal to obtain channel feedback information of the channel.

The channel feedback information may reflect the state of the channel between each target block in the second network device and the terminal. The first network device may determine first indication information used to determine a phase shift matrix for the second network device based on the channel feedback information.

In some implementations, the channel feedback information includes at least one first PMI and an index of a reference signal corresponding to each first PMI. The first PMI indicates a precoding matrix for a channel between each target block in the second network device and the terminal.

It may be understood that each target block sends a reference signal to the terminal, and the terminal receives the reference signal sent by each target block and performs estimations to obtain the precoding matrix for the channel between each target block and the terminal. The precoding matrix for the channel between each target block and the terminal is indicated by one first PMI, and the reference signal sent by the target block is indicated by the index of the reference signal corresponding to the first PMI.

It should be noted that with the method for the terminal to perform channel estimations based on the received reference signal, the least squares (LS) method may be used for estimations, or the minimum mean square error (MMSE) method may be used for estimations, or other estimation algorithms may be used for estimations, which is not limited in the present disclosure.

At step 1203, the channel feedback information is sent to a first network device, in which the channel feedback information is used to determine first indication information, and the first indication information is used to determine a phase shift matrix for the second network device.

In an embodiment of the present disclosure, after estimating the channel between the first network device and the terminal to obtain channel feedback information of the channel, the terminal may send the channel feedback information to the second network device.

The channel feedback information is used to determine first indication information, and the first indication information is used to determine a phase shift matrix for the second network device.

In some implementations, the first indication information includes the channel feedback information.

In some implementations, the first indication information includes the channel feedback information and at least one second PMI. The second PMI indicates a precoding matrix of a channel between each block in the second network device that does not send the reference signal and the terminal.

In some implementations, the first indication information includes a third PMI and interpolation configuration information. The third PMI indicates a precoding matrix corresponding to reference reflection and/or transmission angle information in case that an interpolation processing is performed. The interpolation configuration information is used by the second network device to perform the interpolation processing based on the third PMI. The third PMI and the interpolation configuration information are determined by the first network device.

It should be noted that the channel used by the terminal to send the channel feedback information to the first network device may be a channel passing through the second network device or a direct line-of-sight channel not passing through the second network device, which is not limited herein in the present disclosure.

In summary, by receiving a reference signal sent by each block in a second network device; determining channel feedback information of a channel between at least one target block in the second network device that sends the reference signal and the terminal according to the reference signal; and sending the channel feedback information to a first network device, in which the channel feedback information is used to determine first indication information, and the first indication information is used to determine a phase shift matrix for the second network device, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

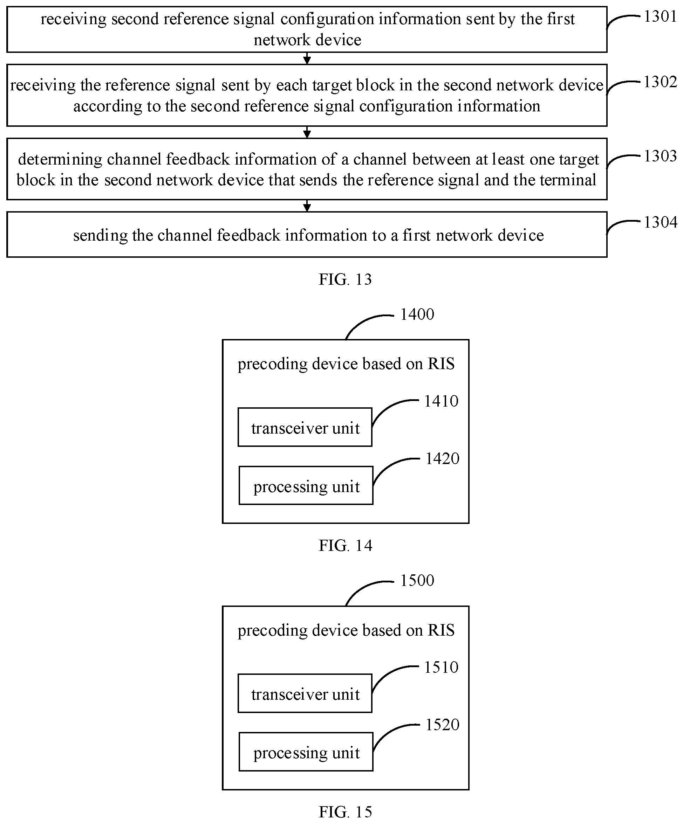

Reference is made to FIG. 13, which is a schematic flowchart of a precoding method based on an RIS provided in an embodiment of the present disclosure. It should be noted that the precoding method based on the RIS in this embodiment of the present disclosure is performed by a terminal. This method may be executed independently or in combination with any one of other embodiments of the present disclosure. As shown in FIG. 13, the method may include, but is not limited to, the following steps.

At step 1301, second reference signal configuration information sent by a first network device is received.

In an embodiment of the present disclosure, the terminal may receive second reference signal configuration information sent by the first network device, and receive the reference signal sent by each target block in the second network device according to the second reference signal configuration information.

Optionally, the second reference signal configuration information includes at least one of: generation information of a reference signal sequence sent by each target block, a serial number of an antenna port occupied by the reference signal sent by each target block, or time-frequency resources occupied by the reference signal sent by each target block.

It should be noted that, the channel used by the terminal to receive the reference signal configuration information sent by the first network device may be a channel passing through the second network device or a direct line-of-sight channel not passing through the second network device, which is not limited herein in the present disclosure.

At step 1302, a reference signal sent by each target block in the second network device is received according to the second reference signal configuration information.

In an embodiment of the present disclosure, the terminal may receive a reference signal sent by each target block in the second network device according to the received second reference signal configuration information.

The reference signal sent by the second network device is determined based on first reference signal configuration information.

Optionally, the first reference signal configuration information may include at least one of: a unit in the target block occupied by the reference signal sent by each target block, generation information of a reference signal sequence sent by each target block, a serial number of an antenna port occupied by the reference signal sent by each target block, or time-frequency resources occupied by the reference signal sent by each target block.

It may be understood that the basic information (generation information of the reference signal sequence, the serial number of the antenna port occupied by the reference signal, or time-frequency resources occupied by the reference signal) of the reference signal sent by each target block in the first reference signal configuration information is the same as the basic information of the reference signal sent by each target block in the second reference signal configuration information, and the terminal may receive the reference signal sent by the second network device based on the first reference signal configuration information according to the second reference signal configuration information.

At step 1303, channel feedback information of a channel between at least one target block in the second network device that sends the reference signal and the terminal is determined.

In an embodiment of the present disclosure, the channel feedback information includes at least one first PMI and an index of a reference signal corresponding to each first PMI. The first PMI indicates a precoding matrix for a channel between each target block in the second network device and the terminal.

It may be understood that each target block sends a reference signal to the terminal, and the terminal receives the reference signal sent by each target block and performs estimations to obtain the precoding matrix for the channel between each target block and the terminal. The precoding matrix for the channel between each target block and the terminal is indicated by one first PMI, and the reference signal sent by the target block is indicated by the index of the reference signal corresponding to the first PMI.

It should be noted that with the method for the terminal to perform channel estimations based on the received reference signal, the LS method may be used for estimations, or the MMSE method may be used for estimations, or other estimation algorithms may be used for estimations, which is not limited in the present disclosure.

At step 1304, the channel feedback information is sent to a first network device.

In an embodiment of the present disclosure, after estimating the channel between the first network device and the terminal to obtain channel feedback information of the channel, the terminal may send the channel feedback information to the second network device.

The channel feedback information is used to determine first indication information, and the first indication information is used to determine a phase shift matrix for the second network device.

In some implementations, the first indication information includes the channel feedback information.

In some implementations, the first indication information includes the channel feedback information and at least one second PMI. The second PMI indicates a precoding matrix of a channel between each block in the second network device that does not send the reference signal and the terminal.

In some implementations, the first indication information includes a third PMI and interpolation configuration information. The third PMI indicates a precoding matrix corresponding to reference reflection and/or transmission angle information in case that an interpolation processing is performed. The interpolation configuration information is used by the second network device to perform the interpolation processing based on the third PMI. The third PMI and the interpolation configuration information are determined by the first network device.

It should be noted that the channel used by the terminal to send the channel feedback information to the first network device may be a channel passing through the second network device or a direct line-of-sight channel not passing through the second network device, which is not limited herein in the present disclosure.

In summary, by receiving second reference signal configuration information sent by the first network device; receiving the reference signal sent by each target block in the second network device according to the second reference signal configuration information; determining channel feedback information of a channel between at least one target block in the second network device that sends the reference signal and the terminal according to the reference signal; and sending the channel feedback information to a first network device, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

Corresponding to the precoding methods based on the RIS provided in the above-mentioned embodiments, the present disclosure further provides a precoding device based on an RIS. Since the precoding device based on the RIS provided in the embodiments of the present disclosure correspond to the methods provided in the above-mentioned embodiments, the implementations of the precoding methods based on the RIS are also applicable to the precoding devices based on the RIS provided in the following embodiments, and will not be described in detail in the following embodiments.

Reference is made to FIG. 14, which is a schematic block diagram of a precoding device based on an RIS provided in an embodiment of the present disclosure.

As shown in FIG. 14, the precoding device 1400 based on the RIS includes a transceiver unit 1410 and a processing unit 1420. The transceiver unit 1410 is configured to acquire unit arrangement information and block information of a second network device, in which the block information indicates a plurality of blocks in the second network device. The processing unit 1420 is configured to determine at least one target block for sending a reference signal from the plurality of blocks in the second network device. The transceiver unit 1410 is further configured to receive channel feedback information sent by a terminal, in which the channel feedback information is determined by the terminal based on the reference signal sent by the at least one target block. The processing unit 1420 is further configured to determine first indication information according to the channel feedback information, in which the first indication information is used to determine a phase shift matrix for the second network device. The transceiver unit 1410 is further configured to send the first indication information to the second network device.

Optionally, the channel feedback information includes at least one first PMI, and an index of a reference signal corresponding to each first PMI, and the first PMI indicates a precoding matrix for a channel between each target block and the terminal.

Optionally, the first indication information includes the channel feedback information, the phase shift matrix for the second network device is obtained by the second network device according to reflection angle information and/or transmission angle information of each block in the second network device and incident angle information between the first network device and the second network device, the reflection angle information and/or the transmission angle information of each block in the second network device that does not send the reference signal is obtained by performing an interpolation processing by the second network device based on the reflection angle information and/or the transmission angle information of each target block, and the reflection angle information and/or the transmission angle information of each target block is determined by the second network device according to the first PMI.

Optionally, the first indication information includes the channel feedback information and at least one second PMI, the second PMI indicates a precoding matrix for a channel between each block in the second network device that does not send the reference signal and the terminal, the first PMI and the second PMI are used by the second network device to determine reflection angle information and/or transmission angle information of each block in the second network device, and the phase shift matrix for the second network device is obtained by the second network device based on the reflection angle information and/or the transmission angle information of each block in the second network device and incident angle information between the first network device and the second network device.

Optionally, the processing unit 1420 is further configured to determine reflection angle information and/or transmission angle information of each target block according to the first PMI, obtain the reflection angle information and/or the transmission angle information of each block in the second network device that does not send the reference signal by performing an interpolation processing based on the reflection angle information and/or the transmission angle information of each target block, and obtain the second PMI according to the reflection angle information and/or the transmission angle information of each block in the second network device that does not send the reference signal.

Optionally, the phase shift matrix for the second network device is not quantized.

Optionally, the first indication information includes a third PMI and interpolation configuration information, the third PMI indicates a precoding matrix corresponding to reference reflection and/or transmission angle information in case that an interpolation processing is performed, and the interpolation configuration information is used by the second network device to perform the interpolation processing based on the third PMI.

Optionally, the processing unit 1420 is further configured to determine reflection angle information and/or transmission angle information of each target block according to the first PMI; obtain reflection angle information and/or transmission angle information of each block in the second network device that does not send the reference signal by performing the interpolation processing based on the reflection angle information and/or the transmission angle information of each target block; determine the phase shift matrix for the second network device according to incident angle information between the first network device and the second network device and reflection angle information and/or transmission angle information of each block in the second network device, in which the phase shift matrix for the second network device is not quantized; and determine the third PMI and the interpolation configuration information according to the phase shift matrix unquantized, in which the interpolation configuration information is used by the second network device to perform the interpolation processing based on the third PMI to obtain the phase shift matrix unquantized.

Optionally, the processing unit 1420 is further configured to quantize the phase shift matrix unquantized according to a phase offset value supported by the second network device to obtain the phase shift matrix quantized for the second network device; and determine the third PMI and the interpolation configuration information according to the phase shift matrix quantized, in which the interpolation configuration information is used by the second network device to perform the interpolation processing based on the third PMI to obtain the phase shift matrix quantized.

Optionally, the interpolation configuration information includes at least one of: an interpolation slope for a linear interpolation, a difference between a PMI corresponding to each block in the second network device and the third PMI, or

an interpolation parameter for a nonlinear interpolation.

Optionally, the transceiver unit 1410 is further configured to send first reference signal configuration information to the second network device according to the unit arrangement information and the block information, in which the first reference signal configuration information is used to determine the reference signal sent by each target block in the second network device.

Optionally, the first reference signal configuration information includes at least one of: a unit in the target block occupied by the reference signal sent by each target block, generation information of a reference signal sequence sent by each target block, a serial number of an antenna port occupied by the reference signal sent by each target block, or time-frequency resources occupied by the reference signal sent by each target block.

Optionally, the transceiver unit 1410 is further configured to send second reference signal configuration information to the terminal according to the unit arrangement information and the block information, in which the second reference signal configuration information is used by the terminal to receive the reference signal sent by each target block in the second network device.

Optionally, the second reference signal configuration information includes at least one of: generation information of a reference signal sequence sent by each target block, a serial number of an antenna port occupied by the reference signal sent by each target block, or time-frequency resources occupied by the reference signal sent by each target block.

Optionally, the unit arrangement information of the second network device includes at least one of: a row number of units in the second network device, a column number of units in the second network device, a row spacing of units in the second network device, a column spacing of units in the second network device, direction information of the second network device, or a unit in the second network device capable of sending the reference signal.

Optionally, the second network device is the RIS.

Optionally, the phase shift matrix is used by the second network device to reflect and/or transmit a signal incident on a surface of the second network device.

With the precoding device based on the RIS in this embodiment, by acquiring unit arrangement information and block information of a second network device, in which the block information indicates a plurality of blocks in the second network device; determining at least one target block for sending a reference signal from the plurality of blocks in the second network device; receiving channel feedback information sent by a terminal, in which the channel feedback information is determined by the terminal based on the reference signal sent by the at least one target block; determining first indication information according to the channel feedback information, in which the first indication information is used to determine a phase shift matrix for the second network device; and sending the first indication information to the second network device, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

Reference is made to FIG. 15, which is a schematic block diagram of a precoding device based on an RIS provided in an embodiment of the present disclosure.

As shown in FIG. 15, the precoding device 1500 based on the RIS includes a transceiver unit 1510 and a processing unit 1520. The transceiver unit 1510 is configured to send unit arrangement information and block information of the precoding device to a first network device, in which the block information indicates a plurality of blocks in the precoding device. The transceiver unit 1510 is further configured to send a reference signal to a terminal, in which the reference signal is used by the terminal to determine channel feedback information of a channel between at least one target block in the precoding device that sends the reference signal and the terminal. The transceiver unit 1510 is further configured to receive first indication information sent by the first network device, in which the first indication information is determined by the first network device based on the channel feedback information. The processing unit 1520 is configured to determine a phase shift matrix for the precoding device according to the first indication information.

Optionally, the channel feedback information includes at least one first PMI, and an index of a reference signal corresponding to each first PMI, and the first PMI indicates a precoding matrix for a channel between each target block and the terminal.

Optionally, the first indication information includes the channel feedback information, and the processing unit 1520 is specifically configured to determine reflection angle information and/or transmission angle information of each target block according to the first PMI; obtain reflection angle information and/or transmission angle information of each block in the precoding device that does not send the reference signal by performing an interpolation processing based on the reflection angle information and/or the transmission angle information of each target block; and determine the phase shift matrix for the precoding device according to incident angle information between the first network device and the precoding device and reflection angle information and/or transmission angle information of each block in the precoding device.

Optionally, the first indication information includes the channel feedback information and at least one second PMI, and the processing unit 1520 is specifically configured to determine reflection angle information and/or transmission angle information of each target block according to the first PMI; determine reflection angle information and/or transmission angle information of each block in the precoding device that does not send the reference signal according to the second PMI; and determine the phase shift matrix for the precoding device according to incident angle information between the first network device and the precoding device and reflection angle information and/or transmission angle information of each block in the precoding device, in which the second PMI indicates a precoding matrix for a channel between each block in the precoding device that does not send the reference signal and the terminal.

Optionally, the second PMI is obtained by the first network device according to the reflection angle information and/or the transmission angle information of each block in the precoding device that does not send the reference signal, the reflection angle information and/or the transmission angle information of each block in the precoding device that does not send the reference signal are/is obtained by performing an interpolation processing by the first network device based on reflection angle information and/or transmission angle information of each target block, and the reflection angle information and/or the transmission angle information of each target block are/is determined by the first network device according to the first PMI.

Optionally, the first indication information includes a third PMI and interpolation configuration information, and the processing unit 1520 is specifically configured to determine reference reflection angle information and/or reference transmission angle information according to the third PMI, and obtain the phase shift matrix for the precoding device by performing an interpolation processing according to the interpolation configuration information based on the reference reflection angle information and/or the reference transmission angle information.

Optionally, the third PMI and the interpolation configuration information are determined by the first network device according to the phase shift matrix for the precoding device, the phase shift matrix for the precoding device is determined by the first network device according to incident angle information between the first network device and the precoding device and reflection angle information and/or transmission angle information of each block in the precoding device, reflection angle information and/or transmission angle information of each block in the precoding device that does not send the reference signal are/is obtained by performing the interpolation processing by the first network device based on reflection angle information and/or transmission angle information of each target block, and the reflection angle information and/or the transmission angle information of each target block are/is determined by the first network device according to the first PMI.

Optionally, the phase shift matrix for the precoding device is not quantized, and the processing unit 1520 is further configured to quantize the phase shift matrix unquantized according to a phase offset value supported by the precoding device to obtain the phase shift matrix quantized for the precoding device.

Optionally, the phase shift matrix for the precoding device is a quantized phase shift matrix obtained by performing a quantization by the first network device based on a phase offset value supported by the precoding device.

Optionally, the interpolation configuration information includes at least one of: an interpolation slope for a linear interpolation, a difference between a PMI corresponding to each block in the precoding device and the third PMI, or an interpolation parameter for a nonlinear interpolation.

Optionally, the method further includes: receiving first reference signal configuration information sent by the first network device, and determining the reference signal sent by each target block in the precoding device according to the first reference signal configuration information.

Optionally, the first reference signal configuration information includes at least one of: a unit in the target block occupied by the reference signal sent by each target block, generation information of a reference signal sequence sent by each target block, a serial number of an antenna port occupied by the reference signal sent by each target block, or time-frequency resources occupied by the reference signal sent by each target block.

Optionally, the unit arrangement information of the precoding device includes at least one of: a row number of units in the precoding device, a column number of units in the precoding device, a row spacing of units in the precoding device, a column spacing of units in the precoding device, direction information of the precoding device, or a unit in the precoding device capable of sending the reference signal.

Optionally, the precoding device is the RIS.

Optionally, the transceiver unit 1510 is further configured to reflect and/or transmit a signal incident on a surface of the precoding device according to the phase shift matrix.

With the precoding device based on the RIS in this embodiment, by sending unit arrangement information and block information of the second network device to a first network device, in which the block information indicates a plurality of blocks in the second network device; sending a reference signal to a terminal, in which the reference signal is used by the terminal to determine channel feedback information of a channel between at least one target block in the second network device that sends the reference signal and the terminal; receiving first indication information sent by the first network device, in which the first indication information is determined by the first network device based on the channel feedback information; determining a phase shift matrix for the second network device according to the first indication information, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

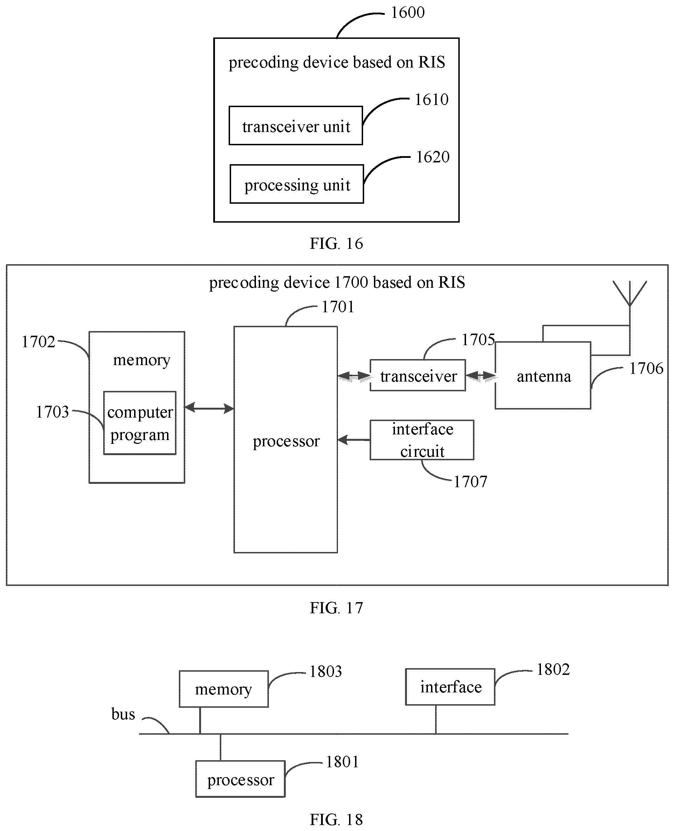

Reference is made to FIG. 16, which is a schematic block diagram of a precoding device based on an RIS provided in an embodiment of the present disclosure.

As shown in FIG. 16, the precoding device 1600 based on the RIS includes a transceiver unit 1610 and a processing unit 1620. The transceiver unit 1610 is configured to receive a reference signal sent by a second network device. The processing unit 1620 is configured to determine channel feedback information of a channel between at least one target block in the second network device that sends the reference signal and the precoding device according to the reference signal. The transceiver unit 1610 is further configured to send the channel feedback information to a first network device, in which the channel feedback information is used to determine first indication information, and the first indication information is used to determine a phase shift matrix for the second network device.

Optionally, the channel feedback information includes at least one first PMI, and an index of a reference signal corresponding to each first PMI, and the first PMI indicates a precoding matrix for a channel between each target block and the precoding device.

Optionally, the transceiver unit 1610 is further configured to receive second reference signal configuration information sent by the first network device, and receive the reference signal sent by each target block in the second network device according to the second reference signal configuration information.

Optionally, the second reference signal configuration information includes at least one of: generation information of a reference signal sequence sent by each target block, a serial number of an antenna port occupied by the reference signal sent by each target block, or time-frequency resources occupied by the reference signal sent by each target block.

Optionally, the second network device is the RIS.

With the precoding device based on the RIS in this embodiment, by receiving a reference signal sent by each block in a second network device; determining channel feedback information of a channel between at least one target block in the second network device that sends the reference signal and the terminal according to the reference signal; and sending the channel feedback information to a first network device, in which the channel feedback information is used to determine first indication information, and the first indication information is used to determine a phase shift matrix for the second network device, it is possible to divide the units in the second network device into multiple groups, so that the far-field assumption holds true for each group, while effectively reducing the complexity of precoding based on the RIS, accelerating the industrialization process, improving the communication efficiency of the communication system assisted by the RIS, reducing the interference, and effectively saving the system overhead.

In order to implement the above-mentioned embodiments, embodiments of the present disclosure further provide a communication device, which includes a processor and a memory having stored therein a computer program. The processor executes the computer program stored in the memory, so that the communication device performs the methods shown in the embodiments of FIGS. 2 to 6 or FIGS. 7 to 11.

In order to implement the above-mentioned embodiments, embodiments of the present disclosure further provide a communication device, which includes a processor and a memory having stored therein a computer program. The processor executes the computer program stored in the memory, so that the communication device performs the methods shown in the embodiments of FIGS. 12 to 13.

In order to implement the above-mentioned embodiments, embodiments of the present disclosure further provide a communication device, which includes a processor and an interface circuit. The interface circuit is configured to receive code instructions and transmit the code instructions to the processor. The processor is configured to run the code instructions to execute the methods shown in the embodiments of FIGS. 2 to 6 or FIGS. 7 to 11.

In order to implement the above-mentioned embodiments, embodiments of the present disclosure further provide a communication device, which includes a processor and an interface circuit. The interface circuit is configured to receive code instructions and transmit the code instructions to the processor. The processor is configured to run the code instructions to execute the methods shown in the embodiments of FIGS. 12 to 13.

Reference is made to FIG. 17, which is a schematic block diagram of another precoding device based on an RIS provided in an embodiment of the present disclosure.

As shown in FIG. 17, the precoding device 1700 based on the RIS may be a network device, or may be a terminal, or may be a chip, a chip system, or a processor supporting the network device to implement the above-mentioned methods, or may be a chip, a chip system or a processor supporting the terminal to implement the above-mentioned methods. The precoding device 1700 based on the RIS may be configured to implement the methods as described in the above-mentioned method embodiments. For details, reference may be made to the description in the above-mentioned method embodiments.

The precoding device 1700 based on the RIS may include one or more processors 1701. The processor 1701 may be a general-purpose processor, a special-purpose processor, or the like. The processor 1701 may be, for example, a baseband processor or a central processor. The baseband processor may be configured to process a communication protocol and communication data, and the central processor may be configured to control a precoding device based on an RIS (such as a base station, a baseband chip, a terminal, a terminal chip, a DU, a CU, or the like), execute a computer program, and process data of the computer program.

Optionally, the precoding device 1700 based on the RIS may further include one or more memories 1702 on which a computer program 1703 may be stored, and the processor 1701 is configured to execute the computer program 1703 to cause the precoding device 1700 based on the RIS to perform the methods as described in the above-mentioned method embodiments. The computer program 1703 may be embedded in the processor 1701, in which case the processor 1701 may be implemented by hardware.

Optionally, the memory 1702 may also have data stored therein. The precoding device 1700 based on the RIS and the memory 1702 may be provided independently or integrated together.

Optionally, the precoding device 1700 based on the RIS may further include a transceiver 1705 and an antenna 1706. The transceiver 1705 may be referred to as a transceiver unit, a transceiver device, a transceiver circuit or the like for implementing a transceiver function. The transceiver 1705 may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the precoding device 1700 based on the RIS may further include one or more interface circuits 1707. The interface circuit 1707 is configured to receive and transmit code instructions to the processor 1701. The processor 1701 is configured to run the code instructions to enable the precoding device 1700 based on the RIS to perform the methods described in the above-mentioned method embodiments.

In an implementation, the processor 1701 may include a transceiver for implementing receiving and transmitting functions. For example, the transceiver may be a transceiver circuit, an interface, or an interface circuit. The transceiver circuit, the interface, or the interface circuit for implementing the receiving and transmitting functions may be separate or integrated together. The transceiver circuit, the interface or the interface circuit may be configured to read and write code/data, or may be configured to transmit or transfer signals.

In an implementation, the precoding device 1700 based on the RIS may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), etc.

The precoding device based on the RIS described in the above embodiments may be a network device or a terminal, but the scope of the precoding device based on the RIS described in the present disclosure is not limited thereto. The structure of the precoding device based on the RIS may not be limited by FIGS. 14 to 16. The precoding device based on the RIS may be a stand-alone device or may be part of a larger device. For example, the precoding device based on the RIS may be: (1) a stand-alone IC, or a chip, or a chip system or subsystem; (2) a set of one or more ICs, in which optionally, the set of ICs may further include a storage component for storing data and computer programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, etc.; (6) others.

For the case where the precoding device based on the RIS may be a chip or a chip system, reference may be made to the schematic block diagram of the chip shown in FIG. 18. The chip shown in FIG. 18 includes a processor 1801 and an interface 1802. The number of processors 1801 may be one or more, and the number of interfaces 1802 may be multiple.

For the case where the chip is configured to implement the functions of the terminal in the embodiments of the present disclosure, the interface 1802 is configured to receive code instructions and transmit the code instructions to the processor, and the processor 1801 is configured to run the code instructions to execute the methods shown in FIGS. 2 to 6, or to execute the methods shown in FIGS. 7 to 11.

For the case where the chip is configured to implement the functions of the network device in the embodiments of the present disclosure, the interface 1802 is configured to receive code instructions and transmit the code instructions to the processor, and the processor 1801 is configured to run the code instructions to execute the methods shown in FIGS. 12 to 13.

Optionally, the chip further includes a memory 1803 for storing desired computer programs and data.

Those skilled in the art may also understand that various illustrative logical blocks and steps listed in the embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the functions, but such implementations should not be understood as extending beyond the protection scope of embodiments of the present disclosure.

An embodiment of the present disclosure further provides a communication system. The communication system includes the precoding device based on the RIS as the terminal and the precoding device based on the RIS as the network device in the above-mentioned embodiments shown in FIGS. 14 to 16. Alternatively, the communication system includes the precoding device based on the RIS as the terminal and the precoding device based on the RIS as the network device in the above-mentioned embodiments shown in FIG. 17.

The present disclosure further provides a readable storage medium having stored therein instructions that, when executed by a computer, cause functions of any one of the above-mentioned method embodiments to be implemented.

The present disclosure further provides a computer program product that, when executed by a computer, causes functions of any one of the above-mentioned method embodiments to be implemented.

All or some of the above embodiments may be implemented by software, hardware, firmware or any combination thereof. When implemented using software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art may understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In the embodiments of the present disclosure, for a certain kind of technical features, the technical features in this kind of technical features are distinguished by terms like "first", "second", "third", "A", "B", "C", "D", etc., and these technical features described with the terms "first", "second", "third", "A", "B", "C" and "D" have no order of precedence or size.

The corresponding relationships shown in the tables in the present disclosure may be configured or predefined. The values of the information in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, etc. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the aforementioned method embodiments, which will not be repeated here.

It should be understood that the steps can be reordered, added, or deleted using the various forms of processes shown above. For example, the steps described in the embodiments of the present disclosure may be executed in parallel or sequentially or in different sequences, provided that desired results of the technical solutions disclosed in the present disclosure are achieved, which is not limited herein.

The above-mentioned embodiments are not intended to limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure should be included in the extent of protection of the present disclosure.

**Claims**

1. A precoding method based on a reconfigurable intelligent surface (RIS), performed by a first network device and comprising:

   acquiring unit arrangement information and block information of a second network device, wherein the block information indicates a plurality of blocks in the second network device;
   determining at least one target block for sending a reference signal from the plurality of blocks in the second network device;
   receiving channel feedback information sent by a terminal, wherein the channel feedback information is determined by the terminal based on the reference signal sent by the at least one target block;
   determining first indication information according to the channel feedback information, wherein the first indication information is used to determine a phase shift matrix for the second network device;
   sending the first indication information to the second network device.

2. The method according to claim 1, wherein the channel feedback information comprises at least one first precoding matrix indicator (PMI), and an index of a reference signal corresponding to each first PMI;
   the first PMI indicates a precoding matrix for a channel between each target block and the terminal.

3. The method according to claim 2, wherein the first indication information comprises the channel feedback information;

   the phase shift matrix for the second network device is obtained by the second network device according to reflection angle information and/or transmission angle information of each block in the second network device and incident angle information between the first network device and the second network device;
   the reflection angle information and/or the transmission angle information of each block in the second network device that does not send the reference signal is obtained by performing an interpolation processing by the second network device based on the reflection angle information and/or the transmission angle information of each target block;
   the reflection angle information and/or the transmission angle information of each target block is determined by the second network device according to the first PMI.

4. The method according to claim 2, wherein the first indication information comprises the channel feedback information and at least one second PMI;

   the second PMI indicates a precoding matrix for a channel between each block in the second network device that does not send the reference signal and the terminal;
   the first PMI and the second PMI are used by the second network device to determine reflection angle information and/or transmission angle information of each block in the second network device; the phase shift matrix for the second network device is obtained by the second network device based on the reflection angle information and/or the transmission angle information of each block in the second network device and incident angle information between the first network device and the second network device.

5. The method according to claim 4, further comprising:

   determining reflection angle information and/or transmission angle information of each target block according to the first PMI;
   obtaining the reflection angle information and/or the transmission angle information of each block in the second network device that does not send the reference signal by performing an interpolation processing based on the reflection angle information and/or the transmission angle information of each target block;
   obtaining the second PMI according to the reflection angle information and/or the transmission angle information of each block in the second network device that does not send the reference signal.

6. The method according to any one of claims 3-5, wherein the phase shift matrix for the second network device is not quantized.

7. The method according to claim 2, wherein the first indication information comprises a third PMI and interpolation configuration information;

the third PMI indicates a precoding matrix corresponding to reference reflection and/or transmission angle information in case that an interpolation processing is performed;
the interpolation configuration information is used by the second network device to perform the interpolation processing based on the third PMI.

8. The method according to claim 7, further comprising:

determining reflection angle information and/or transmission angle information of each target block according to the first PMI;
obtaining reflection angle information and/or transmission angle information of each block in the second network device that does not send the reference signal by performing the interpolation processing based on the reflection angle information and/or the transmission angle information of each target block;
determining the phase shift matrix for the second network device according to incident angle information between the first network device and the second network device and reflection angle information and/or transmission angle information of each block in the second network device, wherein the phase shift matrix for the second network device is not quantized;
determining the third PMI and the interpolation configuration information according to the phase shift matrix unquantized, wherein the interpolation configuration information is used by the second network device to perform the interpolation processing based on the third PMI to obtain the phase shift matrix unquantized.

9. The method according to claim 8, further comprising:

quantizing the phase shift matrix unquantized according to a phase offset value supported by the second network device to obtain the phase shift matrix quantized for the second network device;
determining the third PMI and the interpolation configuration information according to the phase shift matrix quantized, wherein the interpolation configuration information is used by the second network device to perform the interpolation processing based on the third PMI to obtain the phase shift matrix quantized.

10. The method according to any one of claims 7 to 9, wherein the interpolation configuration information comprises at least one of:

an interpolation slope for a linear interpolation;
a difference between a PMI corresponding to each block in the second network device and the third PMI; or
an interpolation parameter for a nonlinear interpolation.

11. The method according to any one of claims 1 to 10, further comprising:
sending first reference signal configuration information to the second network device according to the unit arrangement information and the block information, wherein the first reference signal configuration information is used to determine the reference signal sent by each target block in the second network device.

12. The method according to claim 11, wherein the first reference signal configuration information comprises at least one of:

a unit in the target block occupied by the reference signal sent by each target block;
generation information of a reference signal sequence sent by each target block;
a serial number of an antenna port occupied by the reference signal sent by each target block; or
time-frequency resources occupied by the reference signal sent by each target block.

13. The method according to claim 11, further comprising:
sending second reference signal configuration information to the terminal according to the unit arrangement information and the block information, wherein the second reference signal configuration information is used by the terminal to receive the reference signal sent by each target block in the second network device.

14. The method according to claim 13, wherein the second reference signal configuration information comprises at least one of:

generation information of a reference signal sequence sent by each target block;
a serial number of an antenna port occupied by the reference signal sent by each target block; or
time-frequency resources occupied by the reference signal sent by each target block.

15. The method according to any one of claims 1 to 14, wherein the unit arrangement information of the second network device comprises at least one of:

a row number of units in the second network device;
a column number of units in the second network device;
a row spacing of units in the second network device;
a column spacing of units in the second network device;
direction information of the second network device; or
a unit in the second network device capable of sending the reference signal.

16. The method according to any one of claims 1 to 15, wherein the second network device is the RIS.

17. The method according to any one of claims 1 to 15, wherein the phase shift matrix is used by the second network device to reflect and/or transmit a signal incident on a surface of the second network device.

18. A precoding method based on a reconfigurable intelligent surface (RIS), performed by a second network device and comprising:

sending unit arrangement information and block information of the second network device to a first network device, wherein the block information indicates a plurality of blocks in the second network device;
sending a reference signal to a terminal, wherein the reference signal is used by the terminal to determine channel feedback information of a channel between at least one target block in the second network device that sends the reference signal and the terminal;
receiving first indication information sent by the first network device, wherein the first indication information is determined by the first network device based on the channel feedback information;
determining a phase shift matrix for the second network device according to the first indication information.

19. The method according to claim 18, wherein the channel feedback information comprises at least one first precoding matrix indicator (PMI), and an index of a reference signal corresponding to each first PMI;
the first PMI indicates a precoding matrix for a channel between each target block and the terminal.

20. The method according to claim 19, wherein the first indication information comprises the channel feedback information, and determining the phase shift matrix for the second network device according to the first indication information comprises:

determining reflection angle information and/or transmission angle information of each target block according to the first PMI;
obtaining reflection angle information and/or transmission angle information of each block in the second network device that does not send the reference signal by performing an interpolation processing based on the reflection angle information and/or the transmission angle information of each target block;
determining the phase shift matrix for the second network device according to incident angle information between the first network device and the second network device and reflection angle information and/or transmission angle information of each block in the second network device.

21. The method according to claim 19, wherein the first indication information comprises the channel feedback information and at least one second PMI, and determining the phase shift matrix for the second network device according to the first indication information comprises:

determining reflection angle information and/or transmission angle information of each target block according to the first PMI;
determining reflection angle information and/or transmission angle information of each block in the second network device that does not send the reference signal according to the second PMI;

determining the phase shift matrix for the second network device according to incident angle information between the first network device and the second network device and reflection angle information and/or transmission angle information of each block in the second network device,

wherein the second PMI indicates a precoding matrix for a channel between each block in the second network device that does not send the reference signal and the terminal.

22. The method according to claim 21, wherein

the second PMI is obtained by the first network device according to the reflection angle information and/or the transmission angle information of each block in the second network device that does not send the reference signal;

the reflection angle information and/or the transmission angle information of each block in the second network device that does not send the reference signal are/is obtained by performing an interpolation processing by the first network device based on reflection angle information and/or transmission angle information of each target block;

the reflection angle information and/or the transmission angle information of each target block are/is determined by the first network device according to the first PMI.

23. The method according to claim 19, wherein the first indication information comprises a third **PMI** and interpolation configuration information, and determining the phase shift matrix for the second network device according to the first indication information comprises:

determining reference reflection angle information and/or reference transmission angle information according to the third PMI;

obtaining the phase shift matrix for the second network device by performing an interpolation processing according to the interpolation configuration information based on the reference reflection angle information and/or the reference transmission angle information.

24. The method according to claim 23, wherein

the third **PMI** and the interpolation configuration information are determined by the first network device according to the phase shift matrix for the second network device;

the phase shift matrix for the second network device is determined by the first network device according to incident angle information between the first network device and the second network device and reflection angle information and/or transmission angle information of each block in the second network device;

reflection angle information and/or transmission angle information of each block in the second network device that does not send the reference signal are/is obtained by performing the interpolation processing by the first network device based on reflection angle information and/or transmission angle information of each target block;

the reflection angle information and/or the transmission angle information of each target block are/is determined by the first network device according to the first PMI.

25. The method according to any one of claims 20 to 22 and 24, wherein the phase shift matrix for the second network device is not quantized, and the method further comprises:

quantizing the phase shift matrix unquantized according to a phase offset value supported by the second network device to obtain the phase shift matrix quantized for the second network device.

26. The method according to claim 24, wherein the phase shift matrix for the second network device is a quantized phase shift matrix obtained by performing a quantization by the first network device based on a phase offset value supported by the second network device.

27. The method according to claim 23 or 24, wherein the interpolation configuration information comprises at least one of:

an interpolation slope for a linear interpolation;

a difference between a **PMI** corresponding to each block in the second network device and the third PMI; or

an interpolation parameter for a nonlinear interpolation.

28. The method according to any one of claims 18 to 27, further comprising:

receiving first reference signal configuration information sent by the first network device;
determining the reference signal sent by each target block in the second network device according to the first reference signal configuration information.

29. The method according to claim 28, wherein the first reference signal configuration information comprises at least one of:

a unit in the target block occupied by the reference signal sent by each target block;
generation information of a reference signal sequence sent by each target block;
a serial number of an antenna port occupied by the reference signal sent by each target block; or
time-frequency resources occupied by the reference signal sent by each target block.

30. The method according to any one of claims 18 to 29, wherein the unit arrangement information of the second network device comprises at least one of:

a row number of units in the second network device;
a column number of units in the second network device;
a row spacing of units in the second network device;
a column spacing of units in the second network device;
direction information of the second network device; or
a unit in the second network device capable of sending the reference signal.

31. The method according to any one of claims 18 to 30, wherein the second network device is the RIS.

32. The method according to any one of claims 18 to 30, further comprising:
reflecting and/or transmitting a signal incident on a surface of the second network device according to the phase shift matrix.

33. A precoding method based on a reconfigurable intelligent surface (RIS), performed by a terminal and comprising:

receiving a reference signal sent by a second network device;
determining channel feedback information of a channel between at least one target block in the second network device that sends the reference signal and the terminal according to the reference signal;
sending the channel feedback information to a first network device, wherein the channel feedback information is used to determine first indication information, and the first indication information is used to determine a phase shift matrix for the second network device.

34. The method according to claim 33, wherein the channel feedback information comprises at least one first precoding matrix indicator (PMI), and an index of a reference signal corresponding to each first PMI;
the first PMI indicates a precoding matrix for a channel between each target block and the terminal.

35. The method according to claim 34, further comprising:

receiving second reference signal configuration information sent by the first network device;
receiving the reference signal sent by each target block in the second network device according to the second reference signal configuration information.

36. The method according to claim 35, wherein the second reference signal configuration information comprises at least one of:

generation information of a reference signal sequence sent by each target block;
a serial number of an antenna port occupied by the reference signal sent by each target block; or
time-frequency resources occupied by the reference signal sent by each target block.

37. The method according to any one of claims 33 to 36, wherein the second network device is the RIS.

38. A precoding device based on a reconfigurable intelligent surface (RIS), comprising:

a transceiver unit configured to acquire unit arrangement information and block information of a second network device, wherein the block information indicates a plurality of blocks in the second network device;

a processing unit configured to determine at least one target block for sending a reference signal from the plurality of blocks in the second network device;

wherein the transceiver unit is further configured to receive channel feedback information sent by a terminal, wherein the channel feedback information is determined by the terminal based on the reference signal sent by the at least one target block;

the processing unit is further configured to determine first indication information according to the channel feedback information, wherein the first indication information is used to determine a phase shift matrix for the second network device;

the transceiver unit is further configured to send the first indication information to the second network device.

39. A precoding device based on a reconfigurable intelligent surface (RIS), comprising:

a transceiver unit configured to send unit arrangement information and block information of the precoding device to a first network device, wherein the block information indicates a plurality of blocks in the precoding device;

wherein the transceiver unit is further configured to send a reference signal to a terminal, wherein the reference signal is used by the terminal to determine channel feedback information of a channel between at least one target block in the precoding device that sends the reference signal and the terminal;

the transceiver unit is further configured to receive first indication information sent by the first network device, wherein the first indication information is determined by the first network device based on the channel feedback information;

a processing unit configured to determine a phase shift matrix for the precoding device according to the first indication information.

40. A precoding device based on a reconfigurable intelligent surface (RIS), comprising:

a transceiver unit configured to receive a reference signal sent by a second network device;

a processing unit configured to determine channel feedback information of a channel between at least one target block in the second network device that sends the reference signal and the precoding device according to the reference signal;

wherein the transceiver unit is further configured to send the channel feedback information to a first network device, wherein the channel feedback information is used to determine first indication information, and the first indication information is used to determine a phase shift matrix for the second network device.

41. A communication system, comprising:

a first network device configured to perform the method according to any one of claims 1 to 17;

a second network device configured to perform the method according to any one of claims 18 to 32;

a terminal configured to perform the method according to any one of claims 33 to 37.

second network device 102

first network device 101

terminal 103

FIG. 1

| acquiring unit arrangement information and block information of a second network device, in which the block information indicates a plurality of blocks in the second network device | 201 |
|---|---|
| determining at least one target block for sending a reference signal from the plurality of blocks in the second network device | 202 |
| receiving channel feedback information sent by a terminal, in which the channel feedback information is determined by the terminal based on the reference signal sent by the at least one target block | 203 |
| determining first indication information according to the channel feedback information, in which the first indication information is used to determine a phase shift matrix for the second network device | 204 |
| sending the first indication information to the second network device | 205 |

FIG. 2

acquiring unit arrangement information and block information of a second network device — 301

determining at least one target block for sending a reference signal from the plurality of blocks in the second network device — 302

sending first reference signal configuration information to the second network device according to the unit arrangement information and the block information — 303

sending second reference signal configuration information to the terminal according to the unit arrangement information and the block information — 304

receiving channel feedback information sent by the terminal, in which the channel feedback information includes at least one first PMI and an index of a reference signal corresponding to each first PMI — 305

sending first indication information to the second network device, in which the first indication information includes the channel feedback information and is used to determine a phase shift matrix for the second network device — 306

FIG. 3

acquiring unit arrangement information and block information of a second network device — 401

determining at least one target block for sending a reference signal from the plurality of blocks in the second network device — 402

sending first reference signal configuration information to the second network device according to the unit arrangement information and the block information — 403

sending second reference signal configuration information to the terminal according to the unit arrangement information and the block information — 404

receiving channel feedback information sent by the terminal, in which the channel feedback information includes at least one first PMI and an index of a reference signal corresponding to each first PMI — 405

determining reflection and/or transmission angle information of each target block according to the first PMI — 406

obtaining reflection and/or transmission angle information of each block in the second network device that does not send the reference signal by performing an interpolation processing based on the reflection and/or transmission angle information of each target block — 407

obtaining a second PMI according to the reflection and/or transmission angle information of each block in the second network device that does not send the reference signal — 408

sending first indication information to the second network device, in which the first indication information includes the channel feedback information and at least one second PMI — 409

FIG. 4

| | |
|---|---|
| acquiring unit arrangement information and block information of a second network device | 501 |
| determining at least one target block for sending a reference signal from the plurality of blocks in the second network device | 502 |
| sending first reference signal configuration information to the second network device according to the unit arrangement information and the block information | 503 |
| sending second reference signal configuration information to the terminal according to the unit arrangement information and the block information | 504 |
| receiving channel feedback information sent by the terminal, in which the channel feedback information includes at least one first PMI and an index of a reference signal corresponding to each first PMI | 505 |
| determining reflection and/or transmission angle information of each target block according to the first PMI | 506 |
| obtaining reflection and/or transmission angle information of each block in the second network device that does not send the reference signal by performing an interpolation processing based on the reflection and/or transmission angle information of each target block | 507 |
| determining an unquantized phase shift matrix according to reflection and/or transmission angle information of each block in the second network device and incident angle information between the first network device and the second network device | 508 |
| quantizing the unquantized phase shift matrix according to the phase offset value supported by the second network device to obtain the quantized phase shift matrix | 509 |
| determining a third PMI and interpolation configuration information according to the quantized phase shift matrix | 510 |
| sending first indication information to the second network device, in which the first indication information includes the third PMI and the interpolation configuration information | 511 |

FIG. 5

acquiring unit arrangement information and block information of a second network device ⟍ 601

determining at least one target block for sending a reference signal from the plurality of blocks in the second network device ⟍ 602

sending first reference signal configuration information to the second network device according to the unit arrangement information and the block information ⟍ 603

sending second reference signal configuration information to the terminal according to the unit arrangement information and the block information ⟍ 604

receiving channel feedback information sent by the terminal, in which the channel feedback information includes at least one first PMI and an index of a reference signal corresponding to each first PMI ⟍ 605

determining reflection and/or transmission angle information of each target block according to the first PMI ⟍ 606

obtaining reflection and/or transmission angle information of each block in the second network device that does not send the reference signal by performing an interpolation processing based on the reflection and/or transmission angle information of each target block ⟍ 607

determining an unquantized phase shift matrix according to reflection and/or transmission angle information of each block in the second network device and incident angle information between the first network device and the second network device ⟍ 608

determining at least one third PMI and interpolation configuration information according to the unquantized phase shift matrix ⟍ 609

sending first indication information to the second network device, in which the first indication information includes the at least one third PMI and the interpolation configuration information ⟍ 610

FIG. 6

sending unit arrangement information and block information of the second network device to a first network device, in which the block information indicates a plurality of blocks in the second network device ⟍ 701

sending a reference signal to a terminal, in which the reference signal is used by the terminal to determine channel feedback information of a channel between at least one target block in the second network device that sends the reference signal and the terminal ⟍ 702

receiving first indication information sent by the first network device, in which the first indication information is determined by the first network device based on the channel feedback information ⟍ 703

determining a phase shift matrix for the second network device according to the first indication information ⟍ 704

FIG. 7

sending unit arrangement information and block information of the second network device to a first network device, in which the block information indicates a plurality of blocks in the second network device ⟩— 801

↓

sending a reference signal to a terminal, in which the reference signal is used by the terminal to determine channel feedback information, and the channel feedback information includes at least one first PMI and an index of a reference signal corresponding to each first PMI ⟩— 802

↓

receiving first indication information sent by the first network device, in which the first indication information includes the channel feedback information ⟩— 803

↓

determining reflection angle information and/or transmission angle information of each target block according to the first PMI ⟩— 804

↓

obtaining reflection angle information and/or transmission angle information of each block in the second network device that does not send the reference signal by performing an interpolation processing based on the reflection angle information and/or the transmission angle information of each target block ⟩— 805

↓

determining an unquantized phase shift matrix according to reflection angle information and/or transmission angle information of each block in the second network device and incident angle information between the first network device and the second network device ⟩— 806

↓

quantizing the unquantized phase shift matrix according to a phase offset value supported by the second network device to obtain the quantized phase shift matrix ⟩— 807

↓

reflecting or transmitting a signal incident on a surface of the second network device according to the quantized phase shift matrix ⟩— 808

FIG. 8

sending unit arrangement information and block information of the second network device to a first network device, in which the block information indicates a plurality of blocks in the second network device — 901

↓

sending a reference signal to a terminal, in which the reference signal is used by the terminal to determine channel feedback information, and the channel feedback information includes at least one first PMI and an index of a reference signal corresponding to each first PMI — 902

↓

receiving first indication information sent by the first network device, in which the first indication information includes the channel feedback information and at least one second PMI — 903

↓

determining reflection angle information and/or transmission angle information of each target block according to the first PMI — 904

↓

determining reflection angle information and/or transmission angle information of each block in the second network device that does not send the reference signal according to the second PMI — 905

↓

determining an unquantized phase shift matrix according to reflection angle information and/or transmission angle information of each block in the second network device and incident angle information between the first network device and the second network device — 906

↓

quantizing the unquantized phase shift matrix according to a phase offset value supported by the second network device to obtain the quantized phase shift matrix — 907

↓

reflecting or transmitting a signal incident on a surface of the second network device according to the quantized phase shift matrix — 908

FIG. 9

sending unit arrangement information and block information of the second network device to a first network device, in which the block information indicates a plurality of blocks in the second network device — 1001

sending a reference signal to a terminal, in which the reference signal is used by the terminal to determine channel feedback information, and the channel feedback information includes at least one first PMI and an index of a reference signal corresponding to each first PMI — 1002

receiving first indication information sent by the first network device, in which the first indication information includes at least one third PMI and interpolation configuration information — 1003

determining reference reflection and/or transmission angle information according to the third PMI — 1004

obtaining a quantized phase shift matrix for the second network device by performing an interpolation processing based on the reference reflection and/or transmission angle information according to the interpolation configuration information — 1005

reflecting or transmitting a signal incident on a surface of the second network device according to the quantized phase shift matrix — 1006

FIG. 10

sending unit arrangement information and block information of the second network device to a first network device, in which the block information indicates a plurality of blocks in the second network device — 1101

sending a reference signal to a terminal, in which the reference signal is used by the terminal to determine channel feedback information, and the channel feedback information includes at least one first PMI and an index of a reference signal corresponding to each first PMI — 1102

receiving first indication information sent by the first network device, in which the first indication information includes at least one third PMI and interpolation configuration information — 1103

determining reference reflection and/or transmission angle information according to the third PMI — 1104

obtaining an unquantized phase shift matrix for the second network device by performing an interpolation processing based on the reference reflection and/or transmission angle information according to the interpolation configuration information — 1105

quantizing the unquantized phase shift matrix according to a phase offset value supported by the second network device to obtain the quantized phase shift matrix — 1106

reflecting or transmitting a signal incident on a surface of the second network device according to the quantized phase shift matrix — 1107

FIG. 11

receiving a reference signal sent by a second network device — 1201

determining channel feedback information of a channel between at least one target block in the second network device that sends the reference signal and the terminal — 1202

sending the channel feedback information to a first network device — 1203

FIG. 12

| receiving second reference signal configuration information sent by the first network device | ⌐1301 |

↓

| receiving the reference signal sent by each target block in the second network device according to the second reference signal configuration information | ⌐1302 |

↓

| determining channel feedback information of a channel between at least one target block in the second network device that sends the reference signal and the terminal | ⌐1303 |

↓

| sending the channel feedback information to a first network device | ⌐1304 |

FIG. 13

⌐ 1400

precoding device based on RIS

| transceiver unit | ⌐ 1410 |

| processing unit | ⌐ 1420 |

FIG. 14

⌐ 1500

precoding device based on RIS

| transceiver unit | ⌐ 1510 |

| processing unit | ⌐ 1520 |

FIG. 15

1600

precoding device based on RIS

1610

transceiver unit

1620

processing unit

FIG. 16

precoding device 1700 based on RIS

1701

1702

memory

1703

computer program

processor

1705

transceiver

antenna

1706

interface circuit

1707

FIG. 17

1803

memory

1802

interface

bus

1801

processor

FIG. 18

## INTERNATIONAL SEARCH REPORT

| International application No. |
| --- |
| **PCT/CN2022/121504** |

| | |
| --- | --- |
| **A.** | **CLASSIFICATION OF SUBJECT MATTER** |
| | H04W16/28(2009.01)i |

According to International Patent Classification (IPC) or to both national classification and IPC

| | |
| --- | --- |
| **B.** | **FIELDS SEARCHED** |

Minimum documentation searched (classification system followed by classification symbols)

   IPC:H04W,H04B

Documentation searched other than minimum documentation to the extent that such documents are included in the fields searched

Electronic data base consulted during the international search (name of data base and, where practicable, search terms used)

   CNPAT; WPI; EPODOC; CNKI; IEEE: 参考信号, 导频, 反馈, 分块, 分区, 面, 相移, 训练, 移相, 预编码, 智能, 子集, 子阵, IRS, PMI, RIS, RS, Reference signal, pilot, feedback, block, partition, phase shift, training, precod+, intelligence, surface, subset, subarray

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | US 2022014935 A1 (HUAWEI TECHNOLOGIES CO., LTD.) 13 January 2022 (2022-01-13) description, paragraphs 0146-0166 | 1-41 |
| A | WO 2021237688 A1 (BRITISH TELECOMMUNICATIONS PUBLIC LIMITED COMPANY) 02 December 2021 (2021-12-02) entire document | 1-41 |
| A | WO 2022122717 A1 (SONY EUROPE B.V.) 16 June 2022 (2022-06-16) entire document | 1-41 |
| A | WO 2022183310 A1 (QUALCOMM INC.) 09 September 2022 (2022-09-09) entire document | 1-41 |
| A | WO 2022197894 A1 (IDAC HOLDINGS INC.) 22 September 2022 (2022-09-22) entire document | 1-41 |

| | |
| --- | --- |
| ☐ Further documents are listed in the continuation of Box C. | ☑ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 March 2023** | **21 March 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

International application No.

**PCT/CN2022/121504**

| Patent document cited in search report | | | Publication date (day/month/year) | Patent family member(s) | | | Publication date (day/month/year) |
|---|---|---|---|---|---|---|---|
| US | 2022014935 | A1 | 13 January 2022 | WO | 2022007417 | A1 | 13 January 2022 |
| WO | 2021237688 | A1 | 02 December 2021 | WO | 2021239311 | A1 | 02 December 2021 |
| WO | 2022122717 | A1 | 16 June 2022 | None | | | |
| WO | 2022183310 | A1 | 09 September 2022 | None | | | |
| WO | 2022197894 | A1 | 22 September 2022 | None | | | |

Form PCT/ISA/210 (patent family annex) (July 2022)